(19) Europäisches Patentamt
European Patent Office
Office européen des brevets

(11) EP 2 505 990 A1

(12) # EUROPEAN PATENT APPLICATION

(43) Date of publication:
**03.10.2012 Bulletin 2012/40**

(51) Int Cl.:
***G01N 21/76*** *(2006.01)* ***C12Q 1/68*** *(2006.01)*
***G02B 21/00*** *(2006.01)*

(21) Application number: **12162216.1**

(22) Date of filing: **29.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.03.2011 JP 2011076637**

(71) Applicant: **Hitachi Plant Technologies, Ltd.**
**Toshima-ku**
**Tokyo 170-8466 (JP)**

(72) Inventors:
- **Noda, Hideyuki**
  **Tokyo 100-8220 (JP)**
- **Okanojo, Masahiro**
  **Tokyo 100-8220 (JP)**

(74) Representative: **Beetz & Partner**
**Patentanwälte**
**Steinsdorfstrasse 10**
**80538 München (DE)**

(54) **Luminescence measuring apparatus and microbe counting apparatus**

(57) The present invention relates to a luminescence measuring apparatus for detecting, at high sensitivity and high accuracy, chemoluminescence and bioluminescence of a substance contained in a sample. Specifically, the present invention provides an apparatus for measuring an amount of luminescence in a sample, comprising: a container for the sample; a photodetector for detecting luminescence from the container; and at least one optical filter inserted between the photodetector and the container, and/or a pH modifier added to the container, wherein the photodetector performs measurement of light emitted from the container at all wavelength regions and spectrometry at a specific wavelength range, and/or measurement of light, the intensity of which is changed by the pH modifier. The present invention also relates to a microbe counting apparatus based on luminescence detection of ATP in a viable microbial cell.

Fig. 1A

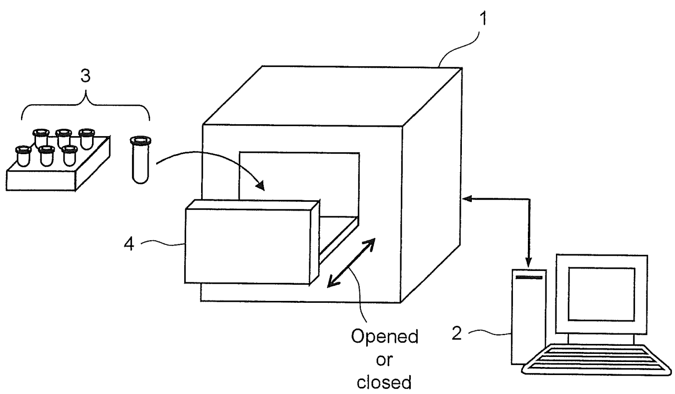


EP 2 505 990 A1

## Description

BACKGROUND OF THE INVENTION

Field of the Invention

The present invention relates to a luminescence measuring apparatus for detecting, at high sensitivity and high accuracy, chemoluminescence and bioluminescence of a substance contained in a sample. The present invention also relates to a microbe counting apparatus based on luminescence detection of ATP in a viable microbial cell.

Background Art

With the development of genetic engineering, tissue engineering, and basic medical science, cell therapy and regenerative medicine enabling regeneration and reconstruction of organs that make use of biological tissue and cultured cells are being developed. With the development of cell therapy and regenerative medicine, research and development of biopharmaceuticals containing cells in a final product are in progress. The importance of guaranteed sterility in the pharmaceutical field is extremely high. In the food field as well, peace of mind and safety consciousness of consumers rises in response to the enforcement of the Hazard Analysis Critical Control Point (HACCP) system and successive accident reports in recent years. There are an increasing number of food factories that regard sterilization of kitchens and manufacturing lines as important.

In a biological cleanroom, it is important to grasp a microbe contamination state of the indoor environment, i.e., monitor the number of microbes floating in the air (airborne microbes) and the number of microbes present on the surfaces of equipment in a facility (attached microbes).

In the airborne microbe monitoring, the air is brought into collision against the solid surface of an agar culture medium to collect microbes using an air sampler (a collision method). A contamination degree is evaluated using a culturing method by culturing the collected microbes for a few days and counting colonies formed on the agar culture medium. The number of attached microbes is also evaluated by colony count using a culturing method same as that for the evaluation of the airborne microbes. However, a collecting method is different. For example, a method of scraping and collecting a check place with a cotton swab or a gauze and forming a suspension of the check place and then inoculating the suspension into the agar culture medium, or a method of directly closely attaching the agar culture medium to the solid surface, which is the check place, and transferring a contaminated place is used. The airborne and attached microbes to be evaluated are bacteria such as E. coli, staphylococci and Bacillus subtilis, and fungi such as mold and yeast (the bacteria and the fungi are hereinafter collectively referred to as microbe or cell).

In a pharmaceutical manufacturing facility, cleanness management criteria for biological cleanroom indoor environment set by the pharmacopoeia are applied. The pharmaceutical manufacturing facility is required to keep less than one microbial cell (CFU: Colony-Forming Unit) in a safe cabinet per 1 $m^3$ of the air and keep less than 10 CFU in a region around the safe cabinet. CFU is a unit representing the number of viable microbial cells (viable cells). Concerning cleanness management for attached microbes, there are many problems in a testing technique such as a collection efficiency and reproducibility. Therefore, many facilities implement self-imposed controls. A public standard and the like are not established yet. Concerning sterile water (pharmaceutical water) in the pharmaceutical manufacturing facility, there is also a cleanness management standard set by the pharmacopoeia. Standard water for injection needs to be managed at less than 10 CFU/100 mL. The culturing method is used for the testing.

As explained above, the culturing method is the mainstream of the microbe counting method and is a method described in the pharmacopoeia. However, in the culturing method, the agar culture medium is cultured in a constant temperature machine for two to three days or, depending on a type of a microbial cell, for ten or more days and the number of generated colonies is visually counted. Therefore, it takes time to obtain a result.

Because of such a background, development of a quick measuring method for contamination monitoring is desired. There are, for example, a method of detecting metabolism activity in growth of viable cells and a method of detecting a microbe as light using protein in the microbial cell.

As a technique for detecting metabolism activity, there are, for example, an impedance method, a coloring method, and an oxygen electrode method. A change in a culture medium component during a microbial growth process and/or a breathed oxygen amount of microbes are measured. Therefore, culture is necessary for a short time. It takes about a half day or one day to obtain a result. Detection sensitivity is about $10^5$ CFU. The sensitivity is insufficient for application in a cleanness management level set in the pharmacopoeia.

On the other hand, in a method making use of fluorescent staining or fluorescence scattering for detecting light using protein in a microbial cell (a fluorescent method) and an adenosine triphosphate (ATP) bioluminescence method (ATP method), a culturing process is unnecessary. Therefore, a result can be obtained within one hour including time required for sample preparation. If a microbe contamination state can be grasped within one hour, a check and measures

can be implemented for a line and a product (including an intermediate) even during a work shift of manufacturing. It is expected that a safety management system and a shipment system are remarkably improved.

In the fluorescent staining method, cell membranes, nucleuses, and the like are stained with a stain having a fluorescent substance and luminescent spots thereof are counted using a fluorescent microscope (see JP Patent Publication (Kokai) No. 2007-60945). It is possible to visualize microbial cells one by one and distinguish viable cells and killed cells. In principle, even a microbial cell that lives in the environment but can not be cultured (Viable but Nonculturable: VBNC) can be detected. Therefore, the fluorescent staining method can also be considered a technique with higher accuracy concerning the cell count than the culturing method. In recent years, not only a function of counting the number of airborne particulates but also a particle counter with a high function that can detect scattering of fluorescence emitted when a laser beam in an ultraviolet region is irradiated on particulates is developed (see WO 2008/105893 A). It is possible to detect the presence of protein used in cellular metabolism, distinguish airborne particulates as abioses and microbes, and count microbial cells one by one in real time. However, in the fluorescent method in general, false luminescence and fluorescence scattering deriving from dusts such as plastic chip, aluminum, soil particles are counted as microbial cells by mistake. Fluorescent substances non-specifically attaching to impurities other than microbial cells in staining are counted. Therefore, there are problems in accuracy and reproducibility.

Subsequently, in the ATP method, the number of ATPs in a cell can be converted into an amount of light and measured based on a luminescent reaction of a firefly. As the principle of the ATP method, substrate luciferin and ATP molecules are captured into a luciferase enzyme and a luminescence amount at the time when oxidized luciferin (oxyluciferin) transitions from an excited state to a ground state according to the consumption of the ATPs is measured.

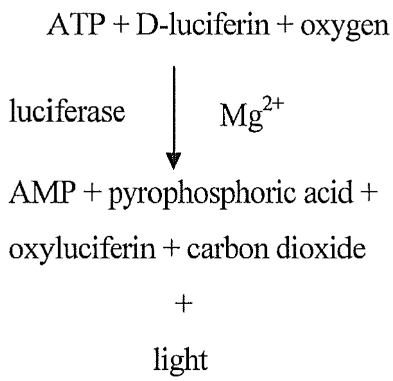


At this point, the consumption of one molecule of ATP corresponds to the generation of one photon. Therefore, the number of generated photons is proportional to the number of ATPs. In viable cells, ATP molecules in attomole (amol = $10^{-18}$ mol) order are present as an energy source. Therefore, it is possible to estimate a total number of viable cells contained in a measurement sample. Further, since quantum efficiency ($\Phi_{BL}$: ≈ 0.5) of the luminescent reaction is most excellent in bioluminescence and chemoluminescence, it is possible to detect one cell as photons equivalent to several hundred thousands. It is possible in principle to detect light equivalent to one cell in the luminescent reaction. Compared with the fluorescent method, in the ATP method, dust other than a biological substance is not detected as light. Therefore, the ATP method is an effective method with high accuracy.

A standard procedure for measuring standard ATP luminescence in viable cells is briefly explained below. The procedure contains the following three steps:

(1) removal of extraneous ATP molecules by an ATP degrading enzyme;
(2) extraction of ATP molecules from viable cells by a surfactant; and
(3) bioluminescent reaction of the ATP molecules extracted from viable cells and a luminescent reagent.

In the method of removing extraneous ATP molecules of (1), physical processing using a membrane filter having a pore with diameter disallowing microbial cells to pass and allowing ATP molecules to pass may be performed. For example, since the ATP molecules adhere to fibers of the membrane filter, it is difficult to completely remove the ATP molecules. On the other hand, in the enzyme degrading method, since processing has to be only solution operation, a special tool is unnecessary. The degrading enzyme does not react to viable cells present in the measurement sample and acts on ATP contained in killed cells having a weakened cell membrane, organic matters peeled from the human skin, materials deriving from body fluid, and the like (see JP Patent Publication (Kokai) No. 2001-136999). A problem in detection of a very small amount of viable cells using the ATP method is deterioration in measurement sensitivity and

reproducibility due to extraneous ATP entering from a worker and an indoor environment. Therefore, a measured value obtained in the normal ATP method is a sum of ATP derived from viable cells (ATP in viable cells) and extraneous ATP. Fewer amount of ATP in viable cells, luminescence deriving from the extraneous ATP more affects a measurement result.

Subsequently, in step (2), the APT degrading enzyme is deactivated. At the same time, ATP is eluted from viable microbe present in the measurement sample. Finally, in step (3), a luciferin-luciferase luminescent reagent and ATP elution liquid are caused to react with each other. An amount of light by a bioluminescent reaction is measured by a photodetector.

In the past, in general, a detection lower limit of the ATP method is about $10^2$ amol (amol = $10^{-18}$ mol). This is equivalent to one hundred or more viable cells. Since sensitivity corresponding to a cleanness management level is not satisfied, as an example in which the ATP method is used for airborne microbe detection, there is also a report example in which culture for about six hours is performed to enable measurement of an environment in which several to ten viable cells are present (Proceedings of 13th Annual Technological Meeting on Air Cleaning and Contamination Control, pages 331 to 334, 1995). In this way, in the purpose of detecting the level of several viable cells, it is said that time of about a half day to one day is necessary until a result is obtained even if the ATP method is used. In recent years, it is possible to measure an amount of ATP molecule equivalent to 1 amol using a dispensing system comprising a washing function for preventing external contamination and a bioluminescence detecting system in which a high-sensitivity detector is arranged in a space in the same apparatus where light is blocked and contaminants from the outside are suppressed (US 2008/0261294 A1, US 2011/0183371 A1, and US 2008/0241871 A1).

## SUMMARY OF THE INVENTION

In the ATP method, an ATP amount of 1 amol can be measured through the increase in sensitivity. Therefore, if several microbes are present, in principle, the microbes can be detected. However, in microbe measurement in cleanness management in a pharmaceutical manufacturing facility and a regenerative medicine facility, apparatus performance for guaranteeing without limit that viable cell counts is zero or one is essential. Therefore, in addition to the improvement of sensitivity, it is an object to improve reliability of a photodetector that does not output a misdetection result. This is because, if it is determined by misdetection that "contamination" occurs, disposal of manufactured products and stop of a manufacturing line are requested, leading to a fall in productivity. The misdetection indicates lights in a visible light region deriving from an external factor other than a collected sample (extraneous lights) rather than bioluminescence due to ATP derived from viable cells contained in a sample collected for contamination evaluation. The extraneous lights are roughly divided into four.

First extraneous light is caused by a light blocking failure of an apparatus ideally configured to meet darkroom specifications. Second extraneous light is light temporarily entering into the luminescence measuring apparatus and accumulated in a detection surface of a detector and other members in the luminescence measuring apparatus (accumulated light), so-called stray light. Third light is false positive luminescence caused when a contamination source is present in the luminescence measuring apparatus and a contaminant substance from the contamination source is mixed in microbes and ATP in a collected sample. Fourth extraneous light is false positive luminescence due to contamination of a kit for measurement including consumables such as a so-called reagent and a container. In weak luminescence measurement based on the ATP method, all the extraneous lights may be detected by the photodetector without being distinguished from ATP light in a visible light region of 400 nm to 750 nm. An ATP amount from viable cells in the collected sample and the extraneous lights are detected. Therefore, misdetection occurs in terms of cleanness evaluation.

It is an object of the present invention to provide an apparatus and a system that can prevent, during luminescence measurement, detection of light due to an external factor and detect only luminescence of interest at high accuracy. More specifically, it is an object of the present invention to provide, in a method for measuring microbes by the ATP method not requiring culture, an apparatus and a system that enable detection of minimum one microbial cell, surely identify only an ATP amount derived from viable cells, measure the ATP amount at high accuracy, and measure a contamination degree.

As a result of extensive researches in order to solve the problems, the inventor performed light measurement at all wavelength regions in a measurement container and light measurement at specific wavelength or in a specific pH based on a characteristic of luminescence whose intensity changes at specific wavelength or in specific pH, checked presence or absence of luminescence due to an external factor from a ratio of luminescence intensities of the luminescence, found that luminescence deriving from a sample can be measured at high sensitivity and high accuracy, and resulted in completing the present invention. Specifically, the present invention is as explained below.

(1) An apparatus for measuring an amount of luminescence in a sample, comprising:

a container for the sample;

a photodetector for detecting luminescence from the container; and
at least one optical filter inserted between the photodetector and the container, and/or a pH modifier added to the container,

wherein the photodetector performs measurement of light emitted from the container at all wavelength regions and spectrometry at a specific wavelength range, and/or measurement of light, the intensity of which is changed by the pH modifier.

(2) The apparatus described in [1], further comprising the at least one optical filter and the pH modifier.

(3) The apparatus described in [1] or [2], further comprising at least one component selected from a group consisting of:

a container holder for the container;
an optical filter holder for supporting the optical filter and inserting the optical filter between the photodetector and the container;
an optical filter position control unit that moves the optical filter holder; and
a photodetector position control unit that moves the photodetector relatively to the container.

(4) The apparatus described in any one of [1] to [3], wherein the optical filter is an interference filter, a dichroic filter, or a combination thereof.

(5) The apparatus described in any one of [1] to [4], wherein the optical filter transmits light at certain wavelength or in a certain wavelength band and reflects light at a shorter wavelength and a longer wavelength than the certain wavelength or wavelength band.

(6) The apparatus described in any one of [1] to [4], wherein the optical filter comprises at least one filter and has center wavelength in a range of 500 nm to 700 nm.

(7) The apparatus described in any one of [1] to [3], wherein the optical filter comprises at least one filter, which is a dichroic filter having a reflected light region of 500 nm or less on the short wavelength side and 600 nm or more on the long wavelength side.

(8) The apparatus described in any one of [1] to [3], wherein the optical filter comprises at least one filter, which is an interference filter having center wavelength of 550 nm to 570 nm and half width of 10 nm to 60 nm.

(9) The apparatus described in any one of [1] to [3], wherein the optical filter comprises two filters, which are a first interference filter having center wavelength of 550 nm to 570 nm and half width of 10 nm to 60 nm and a second interference filter having center wavelength of 600 nm to 630 nm and half width of 10 nm to 60 nm.

(10) The apparatus described in any one of [1] to [3], wherein the optical filter comprises three filters, which are a first interference filter having center wavelength of 550 nm to 570 nm and half width of 10 nm to 60 nm, a second interference filter having center wavelength of 600 nm to 630 nm and half width of 10 nm to 60 nm, and a third interference filter having center wavelength of 650 nm to 680 nm and half width of 10 nm to 60 nm.

(11) The apparatus described in any one of [1] to [3], wherein the optical filter comprises four filters, which are a first interference filter having center wavelength of 430 nm to 480 nm and half width of 10 nm to 60 nm, a second interference filter having center wavelength of 550 nm to 570 nm and half width of 10 nm to 60 nm, a third interference filter having center wavelength of 600 nm to 630 nm and half width of 10 nm to 60 nm, and a fourth interference filter having center wavelength of 650 nm to 680 nm and half width of 10 nm to 60 nm.

(12) The apparatus described in any one of [1] to [11], wherein the pH modifier changes solution pH of the sample from pH 7.0 to pH 7.2.

(13) The apparatus described in any one of [1] to [12], wherein the pH modifier changes solution pH of the sample from pH 7.0 to pH 6.4.

(14) The apparatus described in any one of [1] to [13], wherein the pH modifier changes solution pH of the sample

from pH 7.0 or pH 7.2 to pH 8.5.

(15) The apparatus described in any one of [1] to [14], wherein the luminescence is chemoluminescence or bioluminescence.

(16) An apparatus for counting microbes in a sample, comprising:

a container for a sample;
a photodetector for detecting luminescence from the container; and
at least one optical filter inserted between the photodetector and the container, and/or a pH modifier added to the container,

wherein the container contains a solution for processing ATP chemoluminescence introduced therein, the photodetector performs measurement of light emitted from the container at all wavelength regions and spectrometry at a specific wavelength range, and/or measurement of light, the intensity of which is changed by the pH modifier, and the apparatus measures, from a result of the measurement, the luminescence intensity of ATP from the sample and counts microbes in the sample.

According to the present invention, a luminescence measuring apparatus is provided that can measure luminescence in a sample rapidly and with reliability. The luminescence measuring apparatus has an effect of preventing misdetection of cleanness management monitoring for viable cell count in weak luminescence measurement. Specifically, the luminescence measuring apparatus provides measuring function such as contamination detection for consumables such as reagents and a container, detection of apparatus abnormality, and molecular identification in a measurement sample, and can measure a contamination degree with high reliability. This leads to automation of consumable replacement and early fmding of necessity of apparatus maintenance. It is possible to establish a system for cleanness management monitoring that can be operated by an unmanned service.

Problems, configurations, and effects other than those explained above are clarified by the following description of embodiments.

BRIEF DESCRIPTION OF THE DRAWINGS

FIG. 1A shows an example of a schematic configuration of a luminescence measuring apparatus according to a first embodiment.

FIG. 1B shows an example of a schematic configuration of the luminescence measuring apparatus according to the first embodiment.

FIG. 1C shows an example of a schematic configuration of the luminescence measuring apparatus according to the first embodiment.

FIG. 2A shows an example of a schematic configuration of a luminescence measuring apparatus containing a dispenser according to the second embodiment.

FIG. 2B shows an example of a schematic configuration of the luminescence measuring apparatus containing the dispenser according to the second embodiment.

FIG. 3 is a flowchart of viable cell measurement by the luminescence measuring apparatus according to the second embodiment.

FIG. 4A is a diagram showing a positional relation between a photodetector and a measurement container during dark count measurement according to the second embodiment.

FIGS. 4B and 4C are diagrams showing a positional relation between the photodetector and the measurement container during background light measurement and ATP luminescence measurement according to the second embodiment.

FIGS. 4D and 4E are diagrams showing a positional relation between the photodetector and the measurement container between which an optical filter is inserted according to the second embodiment.

FIG. 5 shows output data of a PMT photodetector obtained in a viable cell count flow according to the second embodiment.

FIG. 6 is a diagram schematically showing a method of calculating the viable cell count according to the second embodiment.

FIG. 7A and FIG. 7B show flowchart of viable cell count by a luminescence measuring apparatus according to a third embodiment.

FIG. 8A and FIG. 8B show output data of a PMT photodetector obtained in a viable cell count flow according to the third embodiment.

FIG. 9A is a graph showing a spectrometry spectrum of wild-type firefly luciferin-luciferase luminescence.

FIG. 9B is a graph showing a spectrometry spectrum of genetically-modified firefly luciferin-luciferase luminescence.

FIG. 10A is an example of a flowchart of viable cell count by a luminescence measuring apparatus according to a fourth embodiment.

FIG. 10B is an example of a flowchart of viable cell count by the luminescence measuring apparatus according to the fourth embodiment.

FIG. 10C is an overall flowchart of viable cell count by the luminescence measuring apparatus according to the fourth embodiment.

FIG. 11 is a flowchart of viable cell count of a luminescence measuring apparatus according to a fifth embodiment.

FIG. 12A and FIG. 12B show output data of a PMT photodetector obtained in a viable cell count flow according to the fifth embodiment.

FIG. 13A is a flowchart including analysis parameters according to the fourth embodiment.

FIG. 13B is a flowchart including analysis parameters according to the fourth embodiment.

DETAILED DESCRIPTION OF THE EMBODIMENTS

The present invention relates to an apparatus for measuring an amount of luminescence in a sample (a luminescence measuring apparatus). The luminescence measuring apparatus comprises at least one optical filter inserted between a photodetector and a measurement container, and/or a pH modifier added to the measurement container.

There are some types of bioluminescence and chemoluminescence whose intensity changes at a specific rate in different wavelength ranges. Therefore, measurement at all wavelength regions of luminescence in the measurement container and spectrometry at a specific wavelength range using an optical filter are performed. It can be determined based on a ratio of luminescence intensities of the bioluminescence and the chemoluminescence whether the luminescence in the container derives from a sample or light due to an external factor (a light blocking failure, accumulated light, or false positive luminescence) is included. As a result, it is possible to measure luminescence from the sample with high accuracy and reliability.

There are some types of bioluminescence and chemoluminescence whose intensity changes at a specific rate according to a pH change of a sample solution. Therefore, measurement at all wavelength regions of luminescence in a measurement container and measurement of light whose intensity is changed by a pH modifier, are performed. It can be determined based on a ratio of luminescence intensities of the bioluminescence and the chemoluminescence whether the luminescence in the container derives from a sample or light due to an external factor (a light blocking failure, accumulated light, or false positive luminescence) is included. As a result, it is possible to measure luminescence from the sample with high accuracy and reliability.

According to the present invention, luminescence to be measured may be bioluminescence or chemoluminescence, and the intensity of the luminescence changes at a specific rate at different wavelength ranges as explained above and/or the intensity of the luminescence changes at a specific rate according to a pH change. Examples of the luminescence, the luminescence intensity of which changes at a specific rate at different wavelength ranges, include wild-type firefly luciferin-luciferase system (FIG. 9A), genetically-modified firefly luciferin-luciferase system (FIG. 9B), luminol-hydrogen peroxide system, and lucigenin-hydrogen peroxide system. Examples of the luminescence, the luminescence intensity of which changes at a specific rate according to a pH change include wild-type firefly luciferin-luciferase system (FIG. 9A), luminol-hydrogen peroxide system, lucigenin-hydrogen peroxide system, and luminal-DMSO (dimethyl sulfoxide) system. A specific process and a specific apparatus for measuring the luminescence are well-known in the art, and are described in, for example, US 2008/0261294 A1 and US 2008/0241871 A1.

Therefore, the luminescence measuring apparatus according to the present invention comprises at least
a container for a sample,
a photodetector for detecting luminescence from the container, and
at least one optical filter inserted between the photodetector and the container.

Alternatively, the luminescence measuring apparatus according to the present invention comprises at least
a container for a sample,
a photodetector for detecting luminescence from the container, and
a pH modifier added to the container.

Alternatively, the luminescence measuring apparatus according to the present invention comprises at least
a container for a sample,
a photodetector for detecting luminescence from the container,
at least one optical filter inserted between the photodetector and the container, and
a pH modifier added to the container.

The luminescence measuring apparatus according to the present invention may further comprise at least one component selected from a group consisting of: a container holder for the container, a photodetector position control unit that can change a space between the photodetector and the container, an optical filter holder for inserting the optical

filter between the photodetector and the container, and an optical filter holder position control unit that moves the optical filter holder.

The luminescence measuring apparatus according to the present invention preferably comprises a container for a sample, a container holder for the container, a photodetector for detecting luminescence from the container, a photodetector position control unit that can change a space between the photodetector and the container, an optical filter holder containing at least one optical filter that can insert the optical filter between the photodetector and the container holder, and an optical filter holder position control unit that moves the optical filter holder. Measurement of light emitted from the container at all wavelength regions that contains the sample and spectrometry at specific wavelength are continuously carried out by the same apparatus using the same sample. The luminescence measuring apparatus preferably further comprises a pH modifier added to the container.

The sample from which luminescence is measured is not particularly limited, and may be a sample from which it is desired to detect or measure bioluminescence or chemoluminescence.

The container for a sample (a measurement container) is not specifically limited as long as the container is made of a material that transmits luminescence from the sample. The container can be a container made of, for example, glass, quartz, or resin. The container is preferably held by the container holder to prevent influence on the container and the sample stored in the container.

The photodetector is not specifically limited as long as the photodetector can detect luminescence. In general, it may be suitable to use a photomultiplier tube (PMT) in terms of sensitivity. The photodetector is provided to be opposed to the container that contains a sample. The optical filter is provided to be opposed to the photodetector. The photodetector is preferably formed to be moved by the photodetector position control unit that can change a space between the photodetector and the container. Consequently, it is possible to prevent operation for taking out the measurement container from the container holder and prevent influence on a measurement result.

At least one optical filter can be used. The optical filter transmits light at certain wavelength or in a certain wavelength band and reflects light at a shorter wavelength and a longer wavelength than the certain wavelength or the wavelength band. Specifically, wavelength or a wavelength band of light to be transmitted and reflected and the number of optical filters to be used may be selected according to a type of luminescence to be measured and a purpose of measurement (luminescence measurement in the sample, microbe counting, etc.). As the optical filter, for example, an interference filter, a dichroic filter, or a combination thereof can be used.

For example, when the optical filter contains at least one filter, an optical filter in a wavelength range suitable for measurement of luminescence to be measured, for example, an optical filter in a wavelength range suitable for measurement of luminescence by luciferin-luciferase can be used. Specific examples of the optical filter include an optical filter having center wavelength in a range of 500 nm to 700 nm, and a dichroic filter having a reflected light region of 500 nm or less on the short wavelength side and 600 nm or more on the long wavelength side. Alternatively, an optical filter in a wavelength range suitable for measurement of luminescence at a luminescence peak of lucifelin-luciferase can be used. Specific examples of the optical filter include an interference filter having center wavelength of 550 nm to 570 nm and half width of 10 nm to 60 nm, an interference filter having center wavelength of 600 nm to 630 nm and half width of 10 nm to 60 nm, and an interference filter having center wavelength of 650 nm to 680 nm and half width of 10 nm to 60 nm (FIGS. 9A and 9B). Alternatively, an optical filter in a wavelength range other than the wavelength range of the luminescence to be measured, for example, an optical filter in a wavelength range other than the wavelength range of the luminescence by luciferin-luciferase and an optical filter in a wavelength range of light by indoor illumination such as a fluorescent lamp can be used. Specific examples of the optical filter include an interference filter having center wavelength of 430 nm to 480 nm and half width of 10 nm to 60 nm.

For example, when the optical filter contains two filters, the optical filters exemplified above can be combined as appropriate. The optical filters in a wavelength range suitable for measurement of a luminescence peak by luciferin-luciferase are preferably combined. For example, the interference filter having center wavelength of 550 nm to 570 nm and half width of 10 nm to 60 nm, and the interference filter having center wavelength of 600 nm to 630 nm and half width of 10 nm to 60 nm can be used in combination. For example, when the optical filter contains three filters, for example, the interference filter having center wavelength of 550 nm to 570 nm and half width of 10 nm to 60 nm, the interference filter having center wavelength of 600 nm to 630 nm and half width of 10 nm to 60 nm, and the interference filter having center wavelength of 650 nm to 680 nm and half width is 10 nm to 60 nm can be used in combination. When the optical filter contains four filters, the interference filter having center wavelength of 430 nm to 480 nm and half width of 10 nm to 60 nm, the interference filter having center wavelength of 550 nm to 570 nm and half width of 10 nm to 60 nm, the interference filter having center wavelength of 600 nm to 630 nm and half width of 10 nm to 60 nm, and the interference filter having center wavelength 650 nm to 680 nm and half width 10 nm to 60 nm can be used in combination.

At least one optical filter is preferably inserted into at least one through-hole provided in the optical filter holder. The optical filter may be inserted between the photodetector and the container and retracted by the optical filter holder position control unit. When retracting the optical filter, the photodetector position control unit does not bring the photodetector into contact with the container opposed thereto. The photodetector position control unit moves the photodetector

to be arranged in a position as close as possible to the container and set a large solid angle to improve acquisition efficiency for light and detect the light at high sensitivity. On the other hand, when the optical filter is inserted, the photodetector may be moved away from the container but is arranged in a position close to the optical filter inserted between the photodetector and the container. The optical filter holder and the optical filter holder position control unit may be integrated.

As the pH modifier, any reagent that can change pH of a solution of a sample can be used. A change in pH of the sample solution can be selected as appropriate according to a type of luminescence whose intensity changes at a specific rate according to the change. For example, in case of luminescence by wild-type firefly luciferin-luciferase, peak luminescence intensity near 560 nm changes at pH 6.4, pH 7.0, pH 7.2, and pH 8.5 (FIG. 9A). Therefore, the pH modifier can be, for example, a pH modifier that changes solution pH of a sample from pH 7.0 to pH 7.2, a pH modifier that changes the solution pH from pH 7.0 to pH 6.4, and a pH modifier that changes the solution pH from pH 7.0 or pH 7.2 to pH 8.5. The pH modifier may be any reagent that can change pH of a solution. For example, a Tris buffer, a phosphate buffer, a MES buffer, a HEPES buffer, a Bis-tris Propane-HCl buffer, and a Tricine-NaOH buffer can be used. The pH modifier is preferably stored in a solution container and added into the measurement container by a solution dispenser explained later.

The luminescence measuring apparatus according to the present invention preferably contains a solution dispenser. The luminescence measuring apparatus contains, for example, at least one nozzle, at least two reagent solution reservoirs, at least one sample container, at least one piping tube, at least one liquid feeding pump connected to the piping tube, and a nozzle position control unit that moves the nozzle into the container. The nozzle position control unit can move the nozzle to the reagent reservoirs, a buffer reservoir, and an upper part of a container opening position of the sample container and insert the nozzle into the containers.

The luminescence measuring apparatus according to the present invention preferably provides a function of counting microbes in a sample. In other words, in the microbe counting apparatus, the nozzle position control unit controls the nozzle to be inserted into the container. The microbe counting apparatus sequentially suctions a solution for processing ATP chemoluminescence from distal ends of nozzles, leads the solution into a collected sample container, and extracts ATP from viable cells. Thereafter, the microbe counting apparatus mixes the solution in the collected sample container with a luciferin-luciferase luminescent reagent, calculates an ATP amount based on the luminescence intensity of the viable cells, and calculates the number of microbes on the basis of the ATP amount. The solution for processing the ATP chemoluminescence includes an ATP eliminating solution (ATP degrading enzyme, etc.) for removing unnecessary ATP molecules, ATP extraction solution (a surfactant, etc.) for extracting ATP molecules from viable cells, and a luminescent reagent that performs luminescent reaction using ATP molecules (a luciferin-luciferase reagent). Those skilled in the art can appropriately select the solution according to, for example, a type of luminescence to be measured, a measurement purpose of luminescence, and the like.

A sample to be subjected to microbe counting is not limited as long as the sample is a sample suspected to contain microbes. Examples of the sample include industrial products such as foods and beverages, pharmaceuticals, and cosmetics and raw materials of the industrial products; and environmental samples such as sea water, river water, industrial water, sewage, soil, and the air. A method of preparing these samples is known in the art.

In the luminescence measurement, first, for several seconds to several tens seconds, the luminescence measuring apparatus measures light emitted from the measurement container at all wavelength regions along a sensitivity region of the photodetector in use without dispersing light and converts the intensity of the light into data. Subsequently, the luminescence measuring apparatus inserts the optical filter between the measurement container and the photodetector, measures the light dispersed through the optical filter with the photodetector, and converts the intensity of the light into data. The luminescence measuring apparatus continuously measures light emitted from the measurement container at all wavelength regions and spectrometry at a specific wavelength range to measure an amount of light in the measurement container and distinguish an amount of luminescence due to a specific substance in the light amount and other wrong factors. In other words, quantitative information of luminescence in the container may be obtained from the light intensity at all the wavelength regions in the container. Qualitative information of luminescence, for example, information concerning presence of luminescence due to an external factor is obtained from a ratio of the light intensity at all the wavelength regions in the container and light intensity obtained by the spectrometry. In the light measurement at all the wavelength regions or the spectrometry, the luminescence measuring apparatus dispenses the pH modifier (a buffer for changing pH, etc.) and converts an intensity change with respect to pH into data to determine whether a contaminant substance is present. Further, the luminescence measuring apparatus derives only a target luminescence amount and improves reliability of a result. It is also possible to separately perform inspection related to reagent consumables using the optical filter and/or the pH modifier.

As explained above, the luminescence measuring apparatus and the microbe counting apparatus according to the present invention can determine presence or absence of luminescence due to an external factor, for example, luminescence deriving from a light blocking failure, accumulated light, or a contamination source contained in the luminescence measuring apparatus or reagents and prevent a false positive result. As a result, the luminescence measuring

apparatuses can measure target luminescence with reliability and count even very few microbes in a sample with high sensitivity and high accuracy.

Specific examples of embodiments of the present invention are explained below with reference to the drawings. However, it should be noted that the embodiments are only examples for realizing the present invention and does not limit the present invention. In the figures, common components are denoted by the same reference numerals.

[EXAMPLE 1]

FIGS. 1A, 1B, and 1C show a schematic configuration of a luminescence measuring apparatus according to a first embodiment. FIG. 1A is a general example of a schematic diagram of the luminescence measuring apparatus and is an external view of an apparatus containing a luminescence measuring apparatus 1 and a control apparatus 2 for controlling the luminescence measuring apparatus 1. The luminescence measuring apparatus 1 has an opening and closing stage 4 that are opened and closed when at least one consumable kit 3 for measurement such as a sample container or a reagent container is set. In a state where the opening and closing stage 4 is closed, the inside of the luminescence measuring apparatus 1 is a dark room which is completely light-blocking and interferes with entering of extraneous light. As the consumable kit 3 for measurement, two sets of a reagent/sample container holder 22 and a measurement container 5 are shown. However, when a supply form of a reagent, for example, a container shape is different, one more set can be prepared and set in the apparatus.

As a high-sensitivity detector that captures weak luminescence, a photomultiplier tube has been conventionally used. In the case of higher-sensitivity specifications, a single photon counting method for subjecting a signal of the photomultiplier tube to digital processing is adopted.

The internal configuration of the luminescence measuring apparatus is as shown in FIGS. 1B and 1C. To facilitate explanation, the configuration is shown in a form of a disassembled view. The measurement container 5 is set in a measurement container holder 6. The measurement container holder 6 is set in a top plate through-hole 9 on a top plate 8 of a light blocking box 7. It may be suitable if it is possible to position the measurement container holder 6 simply by placing the measurement container holder 6 on the top plate 8. For example, a frame for enabling the measurement container holder 6 to be set in a fixed position may be attached to the top plate 8. A square groove in which the bottom of the measurement container holder 6 is fit may be engraved in the top plate 8 and the measurement container holder 6 may be fit in the square groove. A role of the light blocking box 7 is to protect a photoelectric surface 11 of a photodetector 10 from extraneous light that enters upon opening and closing work for the opening and closing stage 4 of the luminescence measuring apparatus 1.

The measurement container holder 6 has a structure for efficiently causing the photoelectric surface 11 to receive luminescence in the measurement container 5. The measurement container holder 6 reflects, in the direction of the photodetector 10, light diverging in a direction different from a direction in which the light enters into the photoelectric surface 11, and leads the light to the photoelectric surface 11. As a method for reflecting and leading the light, the use of mirror reflection is suitable. A member obtained by machining a metal material or forming a metal film on the inner surface of the measurement container holder 6 is used for the measurement container holder 6. As the metal film material, it may be preferably to use silver or aluminum with which reflection efficiency equal to or higher than 80% can be stably obtained. An internal shape of the measurement container holder 6 is preferably a taper shape or a semispherical shape.

The measurement container 5 is inserted from a columnar opening with a small diameter in an upper part of the measurement container holder 6. To fix the measurement container 5, the measurement container 5 is mounted using a brim 12 in an upper part of the measurement container 5 in a state in which the measurement container 5 hangs down in the measurement container holder 6. When the measurement container 5 not having the brim 12 is used, an exclusive stopper or the like (not shown) attached to the measurement container 5 can be prepared. The bottom of the measurement container 5 may be supported by a transparent plate. A substrate with high light transmissibility, in which transparency of a visible light region is about 100%, and made of quartz glass or resin having thickness of 0.5 mm or less may be provided in a lower part of the measurement container holder 6.

In FIG. 1B, the top plate 8 of the light blocking box 7 has structure for enabling a tabular optical filter setting holder 13 in a slide table form to be inserted into the inside of the top plate 8. The inserted tabular optical filter setting holder 13 can be moved in a y-axis direction in the top plate 8 using a first actuator 14. In the tabular optical filter setting holder 13, about several to ten through-holes for setting an optical filter(s) are present. At least one optical filter capable of performing spectroscopy that transmits light with specific wavelength can be set in each of the through-holes. According to the movement of the tabular optical filter setting holder 13, an optical filter (a first optical filter 15, a second optical filter 16, a third optical filter 17, and/or a fourth optical filter 18) can be interposed in the position of the top plate through-hole 9, i.e., between the measurement container 5 and the photoelectric surface 11 of the photodetector 10. A region of the tabular optical filter setting holder 13 where the optical filter is not present functions as a shutter when the opening and closing stage 4 is opened, prevents enter of light from the photoelectric surface 11 and the outside of the luminescence measuring apparatus, and plays a role of preventing accumulated light on the photoelectric surface 11. When the opening

and closing stage 4 of the luminescence measuring apparatus 1 is opened, the photodetector 10 is fit in the light blocking box 7 to block light from the outside of the luminescence measuring apparatus. Further, enter of outside light is blocked by treating the inside of the top plate 8 of the light blocking box 7 as a shutter using a portion of the tabular optical filter setting holder 13, for setting the optical filter, where the through-holes for setting the optical filter are not opened. Details are explained later in an example of operation explanation. In FIGS. 1B and 1C, for simplicity of explanation, the number of optical filters is explained as four. However, the number of optical filters is not limited to this.

The photodetector 10 can be moved in a z-axis direction by a second actuator 19. This has a function for reducing and increasing a distance between the photoelectric surface 11 of the photodetector 10 and the measurement container 5. The photoelectric surface 11 is brought close to the measurement container holder 6 to set a large solid angle during measurement. To achieve this, the photodetector 10 is inserted into the top plate 8 through-hole 9 of the light blocking box 7 or moves beyond the through-hole 9.

In FIG. 1C, the tabular optical filter setting holder 13 is in a turntable form. An optical filter(s) can be located in the top plate through-hole 9 by rotating the tabular optical filter setting holder 13 around a rotating shaft bar 20. In other words, an optical filter(s) (a first optical filter 15, a second optical filter 16, a third optical filter 17, and/or a fourth optical filter 18) can be interposed between the measurement container 5 and the photoelectric surface 11 of the photodetector 10 by rotating and moving the optical filter(s).

In a state shown in FIG. 1C, a place other than the through-hole 9 where an optical filter is set in the tabular optical filter setting holder 13 is present in the position of the top plate through-hole 9. In this case, the tabular optical filter setting holder 13 functions as a shutter of the light blocking box 7. 21 denotes a passing through-hole 21 for a photodetector through which the photodetector 10 can pass. The photodetector 10 can move close to the bottom surface of the measurement container 5 through the through-hole 21.

The center of the measurement container 5, the center of the measurement container holder 6, the center of the top plate through-hole 9, the center of the photoelectric surface 11 of the photodetector 10, and the center position of the optical filter interposed between the measurement container 5 and the photodetector 10 are aligned to be present on the same axis in the z-axis direction. This alignment is preferably executed when the luminescence measuring apparatus is assembled. As the first actuator 14 and the second actuator 19, for example, an actuator controlled by power supply or air supply can be used. The consumable kit 3 for measurement shown in FIG. 1A is equivalent to the measurement container 5 in the examples shown in FIGS. 1B and 1C.

[EXAMPLE 2]

FIGS. 2A and 2B show a schematic configuration of a luminescence measuring apparatus according to a second embodiment. The luminescence measuring apparatus according to this embodiment comprises a solution dispenser in addition to the components in the first embodiment.

In FIG. 2A, a solution dispenser system and a reagent/sample container holder 22, in which a reagent and a measurement sample are set, are added to the apparatus configuration in the first embodiment in which the tabular optical filter setting holder 13 in the slide table form shown in FIG. 1B is used. In FIG. 2B, the solution dispenser system and the reagent/sample container holder 22, in which a reagent and a measurement sample are set, are added to the apparatus configuration in the first embodiment in which the tabular optical filter setting holder 13 in the turntable form shown in FIG. 1C is used. The consumable kit 3 for measurement shown in FIG. 1A is equivalent to the reagent/sample container holder 22, containers set in the holder, and the measurement container 5. A detailed configuration is explained with reference to FIG. 2A.

In FIGS. 2A and 2B, the measurement container 5 is set in the measurement container holder 6. The measurement container holder 6 is set above the top plate through-hole 9 (not shown) on the top plate 8 of the light blocking box 7. Alignment of the measurement container holder 6 is the same as that in the first embodiment. A frame for enabling the measurement container holder 6 to be set in a fixed position may be attached to the top plate 8 of the light blocking box 7. A square groove in which the bottom of the measurement container holder 6 is fit may be engraved in the top plate 8 and the measurement container holder 6 may be fit in the square groove.

The top plate 8 of the light blocking box 7 has structure for enabling the tabular optical filter setting holder 13 to be inserted into the inside of the top plate 8. The inserted tabular optical filter setting holder 13 can be moved in a y-axis direction in the top plate 8 by the first actuator 14.

The photodetector 10 is stored in the light blocking box 7. The photodetector 10 can be moved in the z-axis direction by the second actuator 19.

The solution dispenser is composed of a first dispensing nozzle 33, a second dispensing nozzle 34, a first liquid feeding pump 35, a second liquid feeding pump 36, and a first liquid conveying pipe 37 and a second liquid conveying pipe 38 that respectively connect the first and second dispensing nozzles 33 and 34 and the first and second liquid feeding pumps 35 and 36. The solution dispenser drives the respective liquid feeding pumps 35 and 36 to suck or discharge liquid. In the example shown in FIGS. 2A and 2B, two solution dispensers are provided. However, one unit

may be provided or, conversely, several tens units may be provided according to use. The first and second dispensing nozzles 33 and 34 for performing liquid operation of the solution dispenser are respectively fixed to a fifth actuator 31 and a sixth actuator 32 by a first dispensing nozzle fixing jig 39 and a second dispensing nozzle fixing jib 40. The first and second dispensing nozzles 33 and 34 can be optionally moved to plural solution container positions, where samples or reagents set in the reagent/sample container holder 22 are stocked, by a moving mechanism of a third actuator 29 and a fourth actuator 30. A solution can be suctioned from tips of the nozzles and a suctioned reagent or sample can be dispensed into other solution containers or the measurement container 5. In FIGS. 2A and 2B, six solution containers (a first solution container 23, a second solution container 24, a third solution container 25, a fourth solution container 26, a fifth solution container 27, and a sixth solution container 28) are set in the reagent/sample container holder 22. However, the numbers of the reagent/sample container holder 22 and the solution containers are not limited to this. Specifically, reactive reagents and measurement samples may be dividedly set in separate reagent/sample container holders 22. Although not shown in FIGS. 2A and 2B, it is also suitable to set two or more reagent/sample container holders 22. It is possible to subject plural measurement samples to batch processing.

As the first liquid feeding pump 35 and the second liquid feeding pump 36, a pump of any form can be applied. Specifically, a syringe pump or a peristaltic pump is suitable. 41 denotes a buffer solution tank. The buffer solution tank 41 is connected to the second liquid feeding pump 36 via a third liquid conveying pipe 88. If electromagnetic valves having three-way valves are separately prepared and a pump having a combination of the electromagnetic valves is used, a buffer solution can be automatically supplied into the pump. The pump can be used as an automatic supply system for pipe filling water for performing washing of the liquid conveying pipes and the dispensing nozzles and improving suctioning accuracy and dispensing accuracy. This is an example of a configuration for simplifying work for buffer replacement in the pump.

The first actuator 14, the second actuator 19, the third actuator 29, the fourth actuator 30, the fifth actuator 31, the sixth actuator 32, the first liquid feeding pump 35, and the second liquid feeding pump 36 are driven on the basis of an operation sequence set by the control apparatus 2. Further, a signal from the photodetector 10 is also imported into the control apparatus 2.

A normal operation sequence in performing viable cell count using the ATP method is explained below. FIG. 3 is a flowchart for explaining a procedure of luminescence measurement and viable cell counting (a typical example). First, the opening and closing stage 4 of the luminescence measuring apparatus 1 is opened (S301). The first to sixth solution containers (23, 24, 25, 26, 27, and 28), in which a microbial sample to be measured, an ATP eliminating solution, an ATP extraction solution, and other plural nozzle washing solutions are stocked, are set in the reagent/sample container holder 22. The measurement container 5, in which a luciferin-luciferase luminescent reagent is stocked, is set in a predetermined position of the luminescence measuring apparatus 1, i.e., in the measurement container holder 6 (S302). For simplification of explanation, it is assumed that the ATP eliminating solution is stocked in the first solution container 23, the ATP extraction solution is stocked in the second solution container 24, the microbial sample is stocked in the third solution container 25, and the nozzle washing solutions are stocked in the fourth solution container 26, the fifth solution container 27, and the sixth solution container 28. It may be understood that the reagent, the sample, and the nozzle washing solutions may be respectively set in any positions of the reagent/sample container holder 22. As collection of the microbial sample, in a water examination for a river, industrial wastewater, a sewage plant, and the like and quality inspection for potable water, 100 μL to several mL of water may be collected using a syringe or an exclusive water collection container such as a polyethylene cup. During inspection, the microbial sample can be directly set in the luminescence measuring apparatus and analyzed according to the procedure shown in FIG. 3. Concerning inspection in a place where an amount of microbes is small such as a food factory, a hospital, or a bio-cleanroom of a pharmaceutical factory or a regenerative medicine facility, it is preferable to adopt a concentration technique employing a filtering process. In the case of airborne microbes, the air and liquid are collected and concentrated using a membrane filter method or a combination of a collision method and membrane filtering. In the case of microbes floating in pharmaceutical water, the air and liquid are collected and concentrated using the membrane filtering. Microbes captured on a filter can be used as a microbial sample. The bottom of the third solution container 25 is formed as a filter. Microbes captured on the filter may be treated as a microbial sample. An example of a form of the third solution container is described in WO09/157510.

As the nozzle washing solutions, ATP-free diluted and sterilized water of a standard for injection, an ATP-free HEPES buffer solution, an ATP-free PBS buffer solution, an ATP-free Tris buffer solution, and the like are suitable. To consume ATP, a luciferin-luciferase luminescent reagent may be used as the nozzle washing solution. The measurement container 5 is set in the measurement container holder 6. Thereafter, the opening and closing stage 4 is closed (S303). Subsequently, HV (High Voltage) is applied to the PMT functioning as the photodetector 10 (S304). It is possible to confirm that a dark count value is a usual value, and detect the presence or absence of a light blocking failure or accumulated light. The first actuator 14 is driven such that the passing through-hole 21 explained with reference to FIGS. 1C and 2B, in which the first to fourth optical filters (15, 16, 17 and 18) on the tabular optical filter setting holder 13 are not set, is located above the photoelectric surface 11 of the photodetector 10 (S305). The second actuator 19 is driven such that the photodetector 10 is moved upward (S306). The photoelectric surface 11 passes through or is fitted in the

passing through-hole 21 and is close into contact with the measurement container 5 (FIG. 4B to FIG. 4E). Measurement of background light including intrinsic fluorescence of the measurement container 5 and intrinsic fluorescence of a luminescent reagent in the measurement container 5 is performed (S307).

FIG. 4A shows the position of the photodetector 10 during dark count measurement. FIGS. 4B to 4E show the positions of the photodetector 10 during ATP luminescence measurement for measuring ATP luminescence from viable cells in a sample. Light is highly efficiently collected by bringing the photodetector 10 and the measurement container 5 into close contact with each other. High sensitivity measurement can be performed. FIG. 4B shows an example in which a quartz glass thin plate 42 having thickness equal to or smaller than 0.5 mm is interposed between the measurement container 5 and the photoelectric surface 11 of the photodetector 10. The measurement container 5 is brought into close contact with the quartz glass thin plate 42 to reduce a distance between the measurement container 5 and the quartz glass thin plate 42 as much as possible. A form of hanging the measurement container 5 from the measurement container holder 6 using the brim 12 of the measurement container 5 when the quartz glass thin plate 42 is not used is a form in which light collection efficiency is the highest. This is also suitable from the viewpoint of measurement sensitivity (FIG. 4C). In this way, the quartz glass thin plate 42 is not always necessary. However, when unexpected liquid leakage or the like occurs around the measurement container 5, it is possible to prevent a failure of the photodetector 10 by preventing contact of the liquid and the photoelectric surface 11. Therefore, the quartz glass thin plate 42 is suitable in terms of practical use. The thin plate 42 is not limited to quartz glass. Other Pyrex® glass may be used. A thin plate made of resin may be used as long as the transmissibility of the thin plate is equivalent to that of glass in a visible light region.

Further, if the sensitivity of a measuring system is sufficient because of a sufficient ATP amount, movement of the photodetector 10 is unnecessary. The background light measurement and the ATP luminescence measurement may be carried out with the position during the dark count measurement fixed. In S307, it is confirmed that a background light value is a usual value and that there is no false positive luminescence due to contamination of consumables such as a reagent and a container.

Subsequently, the ATP eliminating solution is suctioned from the first solution container 23, dispensed into the third solution container 25, and mixed and reacted with a collected microbial sample (S308). The ATP eliminating solution is caused to react for about 10 to 30 minutes, whereby killed cells other than viable cells and free ATP are eliminated. Subsequently, the ATP extraction solution is suctioned from the second solution container 24 and dispensed into the third solution container 25. A reaction for extracting ATP from viable cells occurs (S309). Since the ATP extraction solution has a function of deactivating an enzyme reaction of the ATP eliminating solution, the ATP extracted from the viable cells is not eliminated by the ATP eliminating solution added in the preceding process. Time required for the extraction is several minutes. The ATP eliminating solution is an ATP degrading enzyme and contains an enzyme of apyrase or deaminase as a main component. The ATP extraction solution is a solution reagent for a cell membrane and contains a surfactant such as benzalkonium chloride as a main component. The ATP eliminating solution and the ATP extraction solution are commercially available as a kit by plural reagent manufacturers and can be readily available as commercial products.

Subsequently, the microbial sample in the third solution container 25 in which the ATP is extracted from the viable cells (S310) is suctioned and dispensed into the measurement container 5 (S311). The PMT functioning as the photodetector 10 is already in an ON state in S304 and continues measurement of a light amount and obtains data as spectra of continuous dark count, background light, and followed by ATP luminescence (FIG. 5) (S312). After measuring the ATP luminescence shown in FIG. 5 for several minutes, the HV of the PMT is turned off (S313). After the measurement ends, the PMT photodetector 10 is moved downward with the second actuator 19, pulled out from the passing through-hole 21, and returned to the state during the operation sequence start. In this state, the operation sequence ends. The opening and closing stage 4 is opened, and the first solution container 23, the second solution container 24, the third solution container 25, the fourth solution container 26, the fifth solution container 27, the sixth solution container 28, and the measurement container 5 used for the measurement are collected. Then, the control apparatus 2 shifts to measurement of the next sample. For prevention of accumulated light due to enter of strong light of a fluorescent lamp or the like into the PMT photodetector 10, when the opening and closing stage 4 is opened, enter of light into the light blocking box 7 can be blocked in a place of the tabular optical filter setting holder 13 other than the passing through-hole 21 and the through-hole 9 in which the optical filter is set.

It is preferable that the flow of FIG. 3 is automated and the steps sequentially proceed as a user simply presses a start button on the control apparatus 2. Although not displayed, waiting time among steps can be preferably changed and set as a parameter that can be set by the control apparatus 2. For simplification of explanation, a nozzle washing step is not described in the operation flow shown in FIG. 3. In general, the outer wall is immersed in a washing solution before reagent suction and after reagent dispensing. Further, an appropriate amount of buffer solution in a pipe is ejected to wash the nozzle inner wall. It may be suitable to use the washing solution only once. In this flow, it is preferable to insert a step of washing the nozzles in the fourth solution container 26 before suction of the ATP eliminating solution, a step of washing the nozzles in the fifth solution container 27 after dispensing of the ATP eliminating solution or before suction of the ATP extraction solution, and/or a step of washing the nozzles in the sixth solution container 28 before

suction of the pretreated sample. Of course, other flows may be used.

FIG. 5 is a graph of first output data 43 of the PMT photodetector 10 subjected to the viable cell count according to the operation flow explained with reference to FIG. 3. X axis represents time and y axis represents photon counts (Count Per Second). 44 denotes a dark count signal, 45 denotes a background light signal, and 46 denotes an ATP luminescence signal. A result obtained by acquiring the dark count signal 44 for 50 seconds, acquiring the background light signal 45 for 1800 seconds, and acquiring the ATP luminescence signal 46 for 100 seconds is shown. The background light signal 45 emitted from the measurement container 5 containing the luminescent reagent tends to appear larger as an optical signal than the dark count signal 44 because of intrinsic fluorescence of the luminescent reagent and intrinsic fluorescence of the measurement container. 47 denotes a peak of the ATP luminescence signal 46. An ATP luminescence amount 48 derived from viable cells is calculated from an intensity difference between the intensity of the peak and an average in several seconds to several hundreds seconds of the background light signal 45 (FIG. 5). Viable cell counts can be calculated from the obtained ATP amount on the basis of a relation between ATP of known concentration and luminescence intensity (a CPS value) at that point. FIG. 6 is a diagram schematically showing a method of calculating an ATP luminescence amount and calculating viable cell counts. 49 denotes an ATP calibration curve obtained by preparing ATP of known concentration and plotting the number of ATP molecules on x axis and plotting luminescence intensity (CPS) on y axis. 50 denotes calibration curves of three kinds of viable microbes obtained by adjusting the concentrations of model species A, B, and C and plotting the number of microbes (CFU) on x axis and plotting luminescence intensity (CPS) on y axis. 51 denotes a graph showing a relation between cell counts (CFU) of the species A, B, and C and ATP amounts on the basis of the ATP calibration curve 49 and the calibration curves 50 of the three kinds of viable microbes. A relation between microbe counts concerning representative microbial cells (index microbes) and ATP amounts is compiled as a database in advance as shown in FIG. 6. This makes it possible to calculate viable microbe counts based on a measured amount of luminescence. As shown in FIG. 6, an ATP amount contained in one viable microbe is different depending on a species (strain), actually, strict number data cannot be calculated. In the example shown in FIG. 6, if the species C having a smallest ATP amount per microbe is set as an index and contamination state can be monitored by calculation of viable microbe counts to perform strict contamination management for microbes.

[EXAMPLE 3]

In this example, an operation flow is explained in which spectrometry via an optical filter is added when viable cell count is performed using the ATP method.

FIGS. 7A and 7B are flowcharts for explaining a procedure of luminescence measurement and viable cell count (a typical example). First, the opening and closing stage 4 is opened (S701). The first to sixth solution containers (23, 24, 25, 26, 27, and 28), in which a collected microbial sample to be measured, an ATP eliminating solution, an ATP extraction solution, and other plural nozzle washing solutions are stocked, are set in the reagent/sample container holder 22. The measurement container 5, in which a luciferin-luciferase luminescent reagent is stocked, is set in a predetermined position of the luminescence measuring apparatus 1, i.e., in the measurement container holder 6 (S702). It is assumed that the ATP eliminating solution is stocked in the first solution container 23, the ATP extraction solution is stocked in the second solution container 24, the microbial sample is stocked in the third solution container 25, and the nozzle washing solutions are stocked in the fourth solution container 26, the fifth solution container 27, and the sixth solution container 28. The reagent, the sample, and the nozzle washing solutions may be respectively set in any positions of the reagent/sample container holder 22. As the nozzle washing solutions, ATP-free diluted and sterilized water for injection, an ATP-free HEPES buffer, an ATP-free PBS buffer, an ATP-free Tris buffer, and the like are suitable. A luciferin-luciferase luminescent reagent may be used as the nozzle washing solution because it consumes ATP. The measurement container 5 is set in the measurement container holder 6. Thereafter, the opening and closing stage 4 is closed (S703). HV (High Voltage) is applied to the PMT functioning as the photodetector 10 (S704). It is possible to confirm that a dark count value is a usual value and detect the presence or absence of a light blocking failure and/or accumulated light. As shown in FIG. 4A, the photodetector 10 (PMT) is blocked from light in the light blocking box 7 by the light blocking box 7 and a lid of the tabular optical filter setting holder 13. Subsequently, the first actuator 14 is driven such that the passing through-hole 21 explained with reference to FIGS. 1C and 2B, in which the first to fourth optical filters (15, 16, 17 and 18) on the tabular optical filter setting holder 13 are not set, is located above the photoelectric surface 11 of the photodetector 10 (S705). The second actuator 19 is driven such that the photodetector 10 is moved upward (S706). The photoelectric surface 11 passes through or locates inside the passing through-hole 21 and is close into contact with the measurement container 5 (FIG. 4B and FIG. 4C). Measurement of background light (1) including intrinsic fluorescence of the measurement container 5 and intrinsic fluorescence of a luminescent reagent in the measurement container 5 is performed (S707). After performing the measurement for a certain time, subsequently, the PMT photodetector 10 is moved downward (S708) and background light measurement (2) is started (S709). After moving the photodetector 10 downward, the tabular optical filter setting holder 13 is driven such that the first optical filter 15 is inserted between the photoelectric surface 11 and the measurement container 5 (FIG. 4E) or, when the measurement container 5 is held by

the quartz glass thin plate 42, the first optical filter 15 is inserted between the measurement container 5 and the quartz glass thin plate 42 (FIG. 4D). After performing the measurement for a certain time, the tabular optical filter setting holder 13 is further driven such that each of the second optical filter 16, the third optical filter 17, and the fourth optical filter 18 is inserted between the photoelectric surface 11 and the measurement container 5 in order or, when the measurement container 5 is held by the quartz glass thin plate 42, each of the second optical filter 16, the third optical filter 17, and the fourth optical filter 18 is inserted between the measurement container 5 and the quartz glass thin plate 42 in order to carry out measurement for a certain time (S709 to S713). After the spectrometry via the four optical filters ends, the tabular optical filter setting holder 13 and the PMT photodetector 10 are returned to the state of the PMT background light measurement (1) and background light measurement (3) is started (S714 to S716).

During the background light measurement, an eliminating reaction of the free ATP and the ATP deriving from killed cells in the microbial sample and an ATP extraction reaction from the viable cells are carried out. The ATP eliminating solution is suctioned from the first solution container 23, dispensed into the third solution container 25, and mixed and reacted with the microbial sample (S717). The ATP eliminating solution is caused to react for about 10 minutes to 30 minutes, whereby ATP from the killed cells other than the viable cells and the free ATP are eliminated. Subsequently, the ATP extraction solution is suctioned from the second solution container 24 and dispensed into the third solution container 25, and a reaction for extracting ATP from the viable cells is performed (S718). The microbial sample in the third solution container 25 in which the ATP is extracted from the viable cells is suctioned (S719), and dispensed into the measurement container 5 (S720). Simultaneously with the dispensing, the ATP in the sample after the ATP extraction reaction reacts with the luminescent reagent. Biochemical luminescence of the luminescent reagent appears as an optical signal amount depending on an ATP amount (S721). Subsequently, while continuing the measurement of the ATP luminescence, the second actuator 19 is driven such that the PMT photodetector 10 is moved downward (S722), and the first optical filter 15 is inserted between the photoelectric surface 11 and the measurement container 5 or, when the measurement container 5 is held by the quartz glass thin plate 42, the first optical filter 15 is inserted between the measurement container 5 and the quartz glass thin plate 42. After performing the measurement for a certain time, the tabular optical filter setting holder 13 is further driven such that each of the second optical filter 16, the third optical filter 17, and the fourth optical filter 18 is inserted between the photoelectric surface 11 and the measurement container 5 in order or, when the measurement container 5 is held by the quartz glass thin plate 42, each of the second optical filter 16, the third optical filter 17, and the fourth optical filter 18 is inserted between the measurement container 5 and the quartz glass thin plate 42 in order, to carry out measurement for a certain time (S723 to S726). After the spectrometry via the four optical filters ends, the optical filters are returned to the position of the passing through-hole 21 and measurement are performed (S727). Finally, the HV of the PMT is turned off (S728 to S729). An ATP amount is calculated based on a light measurement value and viable cell counts are obtained (S730). After the measurement ends, the PMT photodetector 10 is moved downward with the second actuator 19, pulled out from the passing through-hole 21, and returned to the state during the operation sequence start. In this state, the operation sequence ends. The opening and closing stage 4 is opened and the first solution container 23, the second solution container 24, the third solution container 25, the fourth solution container 26, the fifth solution container 27, the sixth solution container 28, and the measurement container 5 used for the measurement are collected. The control apparatus 2 shifts to measurement of the next sample.

It is preferable that the flows of FIGS. 7A and 7B be automated and the steps sequentially proceed as a user simply presses a start button on the control apparatus 2. Although not displayed, waiting time among steps can be appropriately changed and set as a parameter that can be set by the control apparatus 2. For simplification of explanation, a nozzle washing step is not described in the operation flow shown in FIGS. 7A and 7B. However, in general, the outer wall is immersed in a washing solution before reagent suction and after reagent dispensing. Further, an appropriate amount of buffer solution in a pipe is discharged to wash the nozzle inner wall. It may be suitable to use the washing solution only once. In this flow, it is preferable to insert a step of washing the nozzles in the fourth solution container 26 before suction of the ATP eliminating solution, a step of washing the nozzles in the fifth solution container 27 after dispensing of the ATP eliminating solution or before suction of the ATP extraction solution, and/or a step of washing the nozzles in the sixth solution container 28 before suction of the pretreated sample. Of course, other flows may be used.

FIGS. 8A and 8B are graphs of second output data 52 and third output data 60 of the PMT photodetector 10 subjected to the viable cell count according to the operation flow explained with reference to FIGS. 7A and 7B. X axis represents time and y axis represents photon counts per second (Count Per Second). 53 denotes a dark count signal for 50 seconds obtained from step (S704) in FIG. 7A, 54 denotes a first background light signal for 50 seconds obtained in the position of the passing through-hole 21 by the photodetector in step (S707) in FIG. 7A, 55 denotes a second background light signal for 50 seconds via the first optical filter 15 obtained from step (S710) in FIG. 7A, 56 denotes a third background signal for 50 seconds via the second optical filter 16 obtained from step (S711) in FIG. 7A, 57 denotes a fourth background light signal 57 for 50 seconds via the third optical filter 17 obtained from step (S712) in FIG. 7A, 58 denotes a fifth background light signal for 50 seconds via the fourth optical filter 18 obtained from step (S713) in FIG. 7A, and 59 denotes a sixth background light signal for 50 seconds obtained in the position of the passing through-hole 21 by the photodetector in step (S716) in FIG. 7A.

FIG. 8B is a graph of the third output data 60 obtained subsequently from FIG. 8A. FIG. 8B shows data from a point when the background light measurement is stared, the ATP eliminating reaction, the extraction reaction, and the like end, and the ATP luminescence measurement (S721) is about to be started after 1800 seconds from the background light measurement. 59 denotes data (a sixth background signal) for last 50 seconds immediately before entering into step (S721) of ATP measurement of the sixth background light signal obtained in the position of the passing through-hole 21 by the photodetector in steps (S716) to (S719), 61 denotes a first luminescence signal obtained in the position of the passing through-hole 21 by the photodetector in step (S721) in FIG. 7B, 62 denotes a second ATP luminescence signal for 50 seconds via the first optical filter 15 obtained from step (S723) in FIG. 7B, 63 denotes a third ATP luminescence signal for 50 seconds via the second optical filter 16 obtained from step (S724) in FIG. 7B, 64 denotes a fourth ATP luminescence signal for 50 seconds via the third optical filter 17 obtained from step (S725) in FIG. 7B, and 65 denotes a fifth ATP luminescence signal for 50 seconds via the fourth optical filter 18 obtained from step (S726) in FIG. 7B. 66 denotes a result obtained by returning, in the operation flow shown in FIGS. 7A and 7B, the photodetector to the position of the passing through-hole 21 in the same manner in steps (S728) and (S729) and measuring the sixth ATP luminescence signal 66 for 50 seconds. 67 denotes an ATP luminescence signal curve over time in the passing through-hole position.

The first optical filter 15, the second optical filter 16, the third optical filter 17, and the fourth optical filter 18 are respectively a band-pass filter (a first optical filter) having center wavelength of 562 nm (69 in FIG. 9A) and full width at half maximum of 40 nm, a band-pass filter (a second optical filter) having center wavelength of 624 nm (70 in FIG. 9A) and full width at half maximum of 40 nm, a band-pass filter (a third optical filter) having center wavelength of 655 nm (71 in FIG. 9A) and full width at half maximum of 40 nm, and a band-pass filter (a fourth optical filter) having center wavelength of 472 nm (72 in FIG. 9A) and full width at half maximum of 30 nm. As seen from results shown in FIGS. 8A and 8B, photon counts decrease in order when the first optical filter 15, the second optical filter 16, the third optical filter 17, and the fourth optical filter 18 are inserted between the photoelectric surface 11 and the measurement container 5 in order. This reflects an ATP luminescence spectrometry spectrum 68 of firefly luciferin-luciferase shown in FIG. 9A and is a result obtained by separately measuring luminescence signals with an exclusive spectroscopic measurement apparatus using the photodetector 10 same as that of the luminescence measuring apparatus 1.

As characteristics of the ATP luminescence spectrometry spectrum 68 of firefly luciferin-luciferase, the ATP luminescence spectrometry spectrum 68 includes three center wavelengths of 560 nm, 620 nm, and 670 nm and a sum of peaks A, B, and C that can be fit by a Gaussian curve. The intensities of the three center wavelengths change according to pH of a solution (Table 1 and FIG. 9A). According to a rise in pH of the solution, the peak A of 560 nm markedly increases, although there is no or little change in intensity changes at the peak B of 620 nm dominantly at pH 6.4 and the peak C of 670 nm, which is a very small peak. In FIG. 9A, 73 denotes a luminescence spectrometry spectrum at pH 7.0 and 74 denotes a luminescence spectrometry spectrum at pH 8.5. However, in an alkali solution having a pH value equal to or larger than 8.5, since luminescence intensity markedly falls, the luminescence intensity is not displayed here.

Table 1 (unit: RLU)

| pH | 6.4 | 7.0 | 7.2 | 8.5 |
|---|---|---|---|---|
| Peak A (560nm) | 4000 | 13000 | 17000 | 23000 |
| Peak B (620nm) | 7000 | 8000 | 9000 | 9500 |
| Peak C (670nm) | 3000 | 3000 | 2500 | 2000 |

In the step where the fourth optical filter 18 is used, since light detection in a region not present in an ATP luminescence spectrometry spectrum of firefly luciferin-luciferase is performed, intensity falls to photon counts equal to the dark count signal 53. In other words, the third output data 60 shown in FIG. 8B reflects an intensity difference among the three peaks A, B, and C in a database (pH of a final measurement solution is 7.0) of Table 1. Therefore, the third output data 60 indicates that luciferin-luciferase luminescence from ATP is highly accurately detected.

Photon counts 82 via the fourth optical filter 18 is wavelength unrelated to luciferin-luciferase luminescence based on ATP. Therefore, the photon counts 82 is photon counts same as the dark count signal 44. When photon counts larger than the dark count signal 44 is observed, this indicates that impurities are apparently present, stray light or accumulated light occurs, or light blocking is insufficient. For example, indoor illumination including a fluorescent tube emits light having center wavelength of 430 nm to 450 nm. Therefore, the fourth optical filter 18 is an effective filter that detects abnormality of the luminescence measuring apparatus. When the dark count signal 44 and photon counts of the fourth optical filter 18 are the same but does not reflect a peak ratio for pH in Table 1, not only ATP luminescence of firefly luciferin-luciferase but also luminescence mixed with light due to other factors is detected. Collected data is not based on accurate viable cell count. In this case, contamination that emits fluorescence of used reagents and light enter

reflecting broad indoor illumination light at 500 nm to 700 nm are likely to occur. It is possible to determine that, for example, light blocking properties of the luminescence measuring apparatus, stray light entering into the luminescence measuring apparatus, and accumulated light on the photoelectric surface 11 of the photodetector 10 are suspected and re-inspection can be carried out.

When it is confirmed that viable cell counts is accurately measured, as an amount of viable cell counts itself, photon counts (1) 90 of white light of the first ATP luminescence signal 61 is converted into an ATP amount to obtain viable cell counts. The photon counts (1) 90 of white light can be a value obtained by calculating a difference of photon counts of the sixth background light signal 59. This is because, since signal intensity is high without the use of a filter, it is possible to analyze an ATP amount and convert the ATP amount into viable cell counts on the basis of data having a high S/N ratio. Reliability of the data is improved. From a result obtained by performing the process according to the flowchart shown in FIGS. 7A and 7B, information explained below, i.e., qualitative information and quantitative information of viable cell counts can be obtained.
Quantitative information of viable cell counts:

1. (Photon counts (1) 90 of white light)

Qualitative information of a measurement result:

2. (Photon counts (2) 92 of white light) : (photon counts (1) 75 via the first optical filter)
3. (Photon counts (2) 93 via the first optical filter) : (photon counts (1) 76 via the second optical filter)
4. (Photon counts (2) 89 via the second optical filter) : (photon counts 77 via the third optical filter)
5. (Photon counts 82 via the fourth optical filter) : (photon counts 94 of dark count)

It is possible to measure viable cell counts at high sensitivity and high accuracy based on the above five kinds of information 1 to 5.

With respect to the qualitative information of the measurement result, (photon counts (2) 92 of white light) is represented as A, (photon counts (1) 75 via the first optical filter) is represented as B, (photon counts (2) 93 via the first optical filter) is represented as C, (photon counts (1) 76 via the second optical filter) is represented as D, (photon counts (2) 89 via the second optical filter) is represented as E, (photon counts 77 via the third optical filter) is represented as F, (photon counts 82 via the fourth optical filter) is represented as G, and (photon counts 94 of dark count) is represented as H. Then, the following expressions are obtained.

$$A/B = K1 \qquad \text{(Expression 1)}$$

$$C/D = K2 \qquad \text{(Expression 2)}$$

$$E/F = K3 \qquad \text{(Expression 3)}$$

$$G/H = K4 \qquad \text{(Expression 4)}$$

Further, when Expressions 1 to 4 are combined, the following expressions are obtained.

$$K1/K2/K3 = \text{fixed} \qquad \text{(Expression 5)}$$

$$K2/K3 = \text{fixed} \qquad \text{(Expression 6)}$$

$$K4 = 1 \qquad \text{(Expression 7)}$$

K1 to K4 are constants that change according to pH. Since a difference of reagent lots affects the K values, a slight difference occurs in a peak intensity ratio. Therefore, it is important to perform spectrometry spectrum measurement for

each reagent lot, compile results of the spectrometry spectrum measurement as a database, and store the database in the control apparatus 2. Further, since a slight error is included in the K values, it is preferable to give likelihood of ± 5 to 10% to the respective K values.

It may be appreciated that the optical filters are not limited with their types and the number of thereof used in this example. It is important to select optical filters according to a characteristic of wavelength of a luminescent reagent in use.

On the other hand, it is possible to check contamination of the measurement container 5 and a state of a firefly luciferin-luciferase luminescent reagent itself from the second output data 52 shown in FIG. 8A. Of course, it is possible to also obtain information concerning light blocking properties of the luminescence measuring apparatus, stray light entering into the luminescence measuring apparatus, and accumulated light on the photoelectric surface 11 of the photodetector 10. In general, a luminescent reagent itself has intrinsic luminescence. The first background light signal 54 and the sixth background light signal 59 are intensity of an overall light amount of the intrinsic luminescence deriving from the luminescent reagent. When photon counts of the first background signal 54 is higher than that in usual time, it is important to investigate a cause of the higher photon counts, i.e., whether the cause is intrinsic fluorescence due to contamination of impurities or the like in the measurement container 5, contamination of impurities that induce light such as ATP in the luminescent reagent, or a complex cause of the intrinsic fluorescence and the contamination of impurities. FIG. 8A shows a result indicating only the intrinsic luminescence of the luminescent reagent. Based on background light of the luminescent reagent, weak intrinsic luminescence of firefly luciferin-luciferase in the absence of ATP is detected. When photon counts 83 of background light via the fourth optical filter 18 does not indicate photon counts same as the dark count signal 44 and photon counts larger than the dark count signal 44 is observed, it is clearly indicated that contaminations are apparently present, stray light or accumulated light occurs, or light blocking is insufficient. Specifically, it is possible to check whether a state of the reagent and a state of the luminescence measuring apparatus are normal from five kinds of information 1 to 5 described below.

Quantitative information of intrinsic luminescence:

1. (Photon counts 96 of background light intensity of white light)

Qualitative information of intrinsic luminescence:

2. (Photon counts 96 of a background light signal of white light) : (photon counts 78 of background light via the first optical filter)
3. (Photon counts 78 of background light via the first optical filter) : (photon counts 79 of background light via the second optical filter)
4. (Photon counts 79 of background light via the second optical filter) : (photon counts 80 of background light via the third optical filter)
5. (Photon counts 83 of background light via the fourth optical filter) : (photon counts 94 of dark count)

With respect to the qualitative information of the measurement result, (photon counts 96 of a background light signal of white light) is represented as a, (photon counts 78 of background light via the first optical filter) is represented as b, (photon counts 79 of background light via the second optical filter) is represented as c, (photon counts 80 of background light via the third optical filter) is represented as d, (photon counts 83 of background light via the fourth optical filter) is represented as e, and (photon counts 94 of dark count) is represented as f. Then, the following expressions are obtained.

$$a/b = k1 \qquad \text{(Expression 8)}$$

$$b/c = k2 \qquad \text{(Expression 9)}$$

$$c/d = k3 \qquad \text{(Expression 10)}$$

$$e/f = k4 \qquad \text{(Expression 11)}$$

Further, when Expressions 8 to 11 are combined, the following expressions are obtained.

$$k1/k2/k3 = \text{fixed} \qquad \text{(Expression 12)}$$

$$k2/k3 = \text{fixed} \qquad \text{(Expression 13)}$$

$$k4 = 1 \qquad \text{(Expression 14)}$$

Since a difference of reagent lots affects the respective k values, a slight difference occurs in a peak intensity ratio. Therefore, it is important to perform spectrometry spectrum measurement for each reagent lot, compile results of the spectrometry spectrum measurement as a database, and store the database in the control apparatus 2. Further, since a slight error is included in the k values, it is preferable to give likelihood of $\pm$ 5 to 10% to the respective k values.

FIG. 9B shows an example of an ATP luminescence spectrometry spectrum of genetically-modified luciferase. Since the reagent does not depend on pH, in this case, it is not necessary to be aware of a pH value of a final measurement solution and it is possible to acquire quantitative information and qualitative information. Further, in this example, a time interval of measurement is set to 50 seconds. However, the time interval is not limited to this.

FIGS. 4D and 4E show two forms of a positional relation between the photodetector 10 and the measurement container 5, i.e., a case in which the measurement container 5 is held by the quartz glass thin plate 42 during measurement with an optical filter inserted between the measurement container 5 and the quartz glass thin plate 42 (FIG. 4D) and a case in which the measurement container 5 is held using the brim 12 of the measurement container 5 (FIG. 4E). FIGS. 4D and 4E show a state during insertion of the first optical filter 15. Compared with the position of the photodetector 10 in the position of the passing through-hole 21 (FIGS. 4A and 4B), a distance to the measurement container 5 is large. Therefore, light collection efficiency falls. To set a signal value as close as possible to a signal value of a light amount fall equivalent to a spectrum due to the optical filter insertion, the form in which the quartz glass thin plate 42 is removed (FIG. 4E) is suitable.

[EXAMPLE 4]

In this example, a representative example concerning an operation flow of microbe contamination monitoring is explained. For simplification of explanation, a luminescent consumable kit in which a luminescent reagent is filled in advance is prepared in the measurement container 5. A reagent kit containing the ATP eliminating solution, the ATP extraction solution, and the washing solutions is prepared.

FIGS. 10A and 10B schematically show a flow for performing quality check for the luminescent consumable kit based on the second output data 52. The luminescence measuring apparatus is operated according to the flow shown in FIGS. 7A and 7B. Here, description is simplified and only measurement items are described in a flowchart. Basically, a data analysis (S1010) is inserted between (S716) and (S717) in FIGS. 7A and 7B. Operation branches after step S1010 are added anew on the basis of a result of the data analysis.

A measurement sample and consumables (the luminescent consumable kit and the reagent kit) are set (S1001), measurement is started (S1002), dark count measurement (S1003) and first to sixth background light measurements (S1004 to S1009) are sequentially performed, and data analysis is carried out (S1010). When quantitative information of intrinsic luminescence and qualitative information of intrinsic fluorescence based on a luminescence spectrometry spectrum coincide with the database based on a data analysis result, the control apparatus 2 shifts to first ATP luminescence measurement (S1011). However, when the quantitative information and the qualitative information do not coincide with the database and a fifth background light measurement result is the same as a dark count, the control apparatus 2 shifts to replacement of the luminescent consumable kit (S1012) and performs measurement again (FIG. 10A). When first to fifth background light signals are large and the fifth background light measurement is larger than the dark count, the control apparatus 2 shifts to maintenance of the luminescence measuring apparatus (S1013) (FIG. 10B).

FIG. 10C schematically shows a quality check for the reagent kit based on the third output data 60 and a flow of the quality check. When it is determined as OK in (S1011), i.e., it is determined that no contamination of the luminescent consumables occurs and no apparatus abnormality occurs either, and then, the first ATP luminescence measurement is performed (S1011). Subsequently, second to sixth ATP luminescence measurements are performed (S1014 to S 1018) and data analysis is carried out (S 1019). When quantitative information and qualitative information of an ATP luminescence amount coincide with the database, calculation of viable cell counts is subsequently performed (S1020) and a result is displayed. The operation sequence ends (END). On the other hand, when the quantitative information

and the qualitative information do not coincide with the database and a fifth background light measurement result is the same as a dark count, replacement of the measurement sample and the reagent kit is carried out (S1021), replacement of the luminescent consumable kit is carried out (S1012), and measurement is performed again (measurement failure).

If a loading mechanism for continuously automatically leading the luminescent consumable kit, the reagent kit, and/or the measurement sample into the luminescence measuring apparatus 1 is provided, a full automatic operation is possible except a case of a shift to apparatus maintenance.

FIGS. 13A and 13B show an example of a flowchart including analysis parameters analyzed based on output data obtained in FIGS. 10A to 10C and indicating whether normal measurement ends in the conversion into viable cell counts, whether an operation sequence shifts to maintenance of the luminescence measuring apparatus, or the operation sequence shifts to replacement of the consumable kit.

In FIG. 13B, processing is performed on the basis of parameters K1 to K4 obtained from a result of ATP measurement. A spectrometry spectrum is acquired in advance with a spectrophotometer or the like (S1308), K1(ref. to K4(ref.) values are calculated from a data analysis, and the spectrometry spectrum and the K1(ref.) to K4(ref.) values are stored in the control apparatus 2 (S1309).

As shown in FIG. 10C, the sixth ATP luminescence measurement (S1018) ends. K1(data) to K4(data) are calculated from the output data (S1302 and S1303), and output calculation value data and data of the spectrometry spectrum are compared (S1304). When the output calculation value data and spectrometry spectrum data coincide with each other in Comparison 1 (K1/K2/K3) (S1304), subsequently, Comparison 2 (K4 value) is carried out. When K4(data) = K4(ref.) holds, it is verified that accurate measurement of a sample is performed. Subsequently, calculation of viable cell counts based on an obtained ATP luminescence amount is performed (S1306). The operation sequence ends (S1307).

On the other hand, when it is determined as NG in the Comparison 1, Comparison 3 (K2/K3) is performed (S 1310). When the output calculation value data and the spectrometry spectrum data coincide with each other, subsequently, the Comparison 2 (K4 value) is performed (S 1311). When K4(data) = K4(ref.) holds, a warning message instructing to carry out replacement of the consumable kit is to be announced (S1313). When the output calculation value data and the spectrometry spectrum data do not coincide with each other, a warning message instructing to carry out maintenance of the luminescence measuring apparatus (S1314) is to be announced (S1314). When it is determined as NG in the Comparison 3 (S 1310), the Comparison 2 is performed (S 1312). In the case of OK in a result of the Comparison 2, the warning message instructing to replace the consumable kit (S1313) is to be announced. On the other hand, a result of NG is obtained in (S 1312), a warning for apparatus maintenance (S1314) is to be announced. In the case of OK in the Comparison 1 (S1304) but NG in the next Comparison 2 (S1305), the warning for apparatus maintenance (S 1314) is to be announced. When the operation sequence reaches (S1313), if a replacement system for consumables is established, an automatic replacement function works and it is possible to cause the luminescence measuring apparatus to continuously operate. However, when the operation reaches (S1314), the luminescence measuring apparatus is stopped and maintenance of the luminescence measuring apparatus is performed with the intervention of a person.

FIG. 13A is a determination flow for consumable check for reagents and apparatus state check before shifting to ATP luminescence measurement. FIG. 13A is substantially the same as FIG. 13B. In the case of OK in (S1305), actual measurement of a sample is to be started (S1315).

[EXAMPLE 5]

It is possible to determine whether a signal is based on ATP luminescence by checking pH dependency of an ATP luminescence signal in a measurement solution. For example, when both a background signal and an ATP luminescence signal are extremely weak, for example, photon counts (1) 75 via a first optical filter equivalent to the intensity of a peak A shown in FIG. 9A can be detected. However, in some case, photon counts (1) 76 via a second optical filter equivalent to the intensity of a peak B and photon counts 77 via a third optical filter equivalent to the intensity of a peak C cannot be detected as a signal. In such a case, it is preferable to check pH dependency of the ATP luminescence signal in the measurement solution.

FIG. 11 is an example of a flow of pH change measurement. A measurement sample and consumables (a luminescent consumable kit and a reagent kit) are set (S1101), measurement is started (S1102), dark count measurement (S1103) and first to sixth background light measurements are sequentially carried out (S1104 to S 1109), and a data analysis is carried out (S1110). When a data analysis result is different from a database based on a luminescence spectrometry spectrum (as shown in FIG. 12A, the background light signals 55, 56, 57, and 58 during insertion of an optical filter are equal to or smaller than a detection limit) or when a weak signal that should not be detected is detected when the optical filter is inserted because of weak luminescence, specifically, when a signal is detected in the fifth background light measurement (S 1108), replacement of the luminescent consumable kit is performed (S1117). When it is apparent that a signal of the first background light measurement (S1104) is strong and signal intensity of the fifth background light measurement (S1108) is higher than a dark count value, apparatus maintenance is performed and the

measurement is stopped (S1118). On the other hand, when output data 84 of the background light signals shown in FIG. 12A is obtained, first ATP luminescence measurement is performed (S1111). Subsequently, the first optical filter (a band-pass filter having center wavelength of 562 nm) is inserted, second ATP luminescence measurement is performed (S1112), and a pH modifier is added. There are various pH modifiers. In this example, a Tris buffer solution at pH 11.0 is added to a measurement solution at pH 7.0 from a dispensing nozzle by an appropriate amount and changes a measurement solution pH from 7.0 to 8.5. Data analysis of results obtained in (S1111) to (S1113) is carried out (S1114). When quantitative information of an ATP luminescence amount and qualitative information by a pH change coincide with the database, subsequently, calculation of viable cell counts is performed (S1115) and a result is displayed. The operation sequence ends. On the other hand, when the quantitative information and the qualitative information do not coincide with the database and a result of the fifth background light measurement (S1108) is the same as the dark count, replacement of the measurement sample and the reagent kit are carried out (S 1120), replacement of the luminescent consumable kit is carried out (S1119), and measurement is performed again (measurement failure).

FIG. 12B is a graph of output data 85 of an ATP luminescence signal used for the data analysis. The second ATP signal 62 having the intensity of the peak A increases in a pH 8.5 changing section 87 at the same wavelength according to a change from pH 7.0 to pH 8.5. Accuracy of measurement can be checked based on an increase ratio of a signal value 86 after the change to pH 8.5 and a signal value 97 at pH 7.0. Accuracy of qualitative information of measurement of viable cell counts can be checked.

In this example, both the optical filter and the pH modifier are used in combination. However, it is also possible to independently use the pH modifier without using the optical filter. In that case, a ratio of light intensity at all wavelength regions measured without the addition of the pH modifier and light intensity at all wavelength regions measured with the addition of the pH modifier is calculated and qualitative information of luminescence measurement can be obtained.

The present invention is not limited to the embodiments and examples explained above and includes various modifications. For example, the embodiments and examples are explained in detail in order to clearly explain the present invention. The embodiments and examples are not always limited to specific embodiments or examples including all the components explained above. A part of the components of a certain embodiment or example can be replaced with the components of another embodiment or example. The component of another embodiment or example can be added to the components of a certain embodiment or example. Concerning a part of the components of the embodiments or examples, addition of other components or deletion or replacement of the components can be performed.

DESCRIPTION OF NUMERICALS

| | |
|---|---|
| 1 | luminescence measuring apparatus |
| 2 | control apparatus |
| 3 | consumable kit for measurement |
| 4 | opening and closing stage |
| 5 | measurement container |
| 6 | measurement container holder |
| 7 | light blocking box |
| 8 | top plate of the light blocking box |
| 9 | through-hole of the top plate |
| 10 | photodetector |
| 11 | photoelectric surface |
| 12 | brim |
| 13 | tabular optical filter setting holder |
| 14 | first actuator |
| 15 | first optical filter |
| 16 | second optical filter |
| 17 | third optical filter |
| 18 | fourth optical filter |
| 19 | second actuator |
| 20 | rotating shaft bar |
| 21 | passing through-hole of the photodetector |
| 22 | reagent/sample container holder |
| 23 | first solution container |
| 24 | second solution container |
| 25 | third solution container |

26 fourth solution container
27 fifth solution container
28 sixth solution container
29 third actuator
30 fourth actuator
31 fifth actuator
32 sixth actuator
33 first dispensing nozzle
34 second dispensing nozzle
35 first liquid feeding pump
36 second liquid feeding pump
37 first liquid conveying pipe
38 second liquid conveying pipe
39 first dispensing nozzle fixing jig
40 second dispensing nozzle fixing jig
41 buffer solution tank
42 quartz glass thin plate
43 first output data
44 dark count signal
45 background light signal
46 ATP luminescence signal
47 peak of the ATP luminescence signal
48 ATP luminescence amount from viable cells
49 ATP calibration curve
50 calibration curves of three kinds of viable cells
51 graph showing a relation between the cell counts of species A, B, and C and an ATP amount
52 second output data
53 dark count signal
54 first background light signal
55 second background light signal
56 third background light signal
57 fourth background light signal
58 fifth background light signal
59 sixth background light signal
60 third output data
61 first ATP luminescence signal
62 second ATP luminescence signal
63 third ATP luminescence signal
64 fourth ATP luminescence signal
65 fifth ATP luminescence signal
66 sixth ATP luminescence signal
67 ATP luminescence signal curve over time in a position of a passing through-hole
68 ATP luminescence spectrometry spectrum (without spectrum) of firefly luciferin-luciferase
69 center wavelength 562 (nm) of a band-pass filter functioning as a first optical filter
70 center wavelength 624 (nm) of a band-pass filter functioning as a second optical filter
71 center wavelength 655 (nm) of a band-pass filter functioning as a third optical filter
72 center wavelength 472 (nm) of a band-pass filter functioning as a fourth optical filter
73 luminescence spectrometry spectrum at pH 7.0
74 luminescence spectrometry spectrum at pH 8.5
75 photon counts (1) via the first optical filter
76 photon counts (1) via the second optical filter
77 photon counts via the third optical filter
78 photon counts of background light via the first optical filter
79 photon counts of background light via the second optical filter
80 photon counts of background light via the third optical filter
81 ATP luminescence spectrometry spectrum using genetically-modified luciferase
82 photon counts via the fourth optical filter
83 photon counts of background light via the fourth optical filter

84 output data of a background light signal
85 output data of ATP luminescence signal
86 signal after change to pH 8.5
87 pH 8.5 changing section
88 third liquid conveying pipe
89 photon counts (2) via the second optical filter
90 photon counts (1) of white light
92 photon counts (2) of white light
93 photon counts (2) via the first optical filter
94 photon counts of dark count
96 photon counts of a background light signal of white light
97 signal at pH 7.0

## Claims

**1.** An apparatus for measuring an amount of luminescence in a sample, comprising:

a container for the sample;
a photodetector for detecting luminescence from the container; and
at least one optical filter inserted between the photodetector and the container, and/or a pH modifier added to the container,

wherein the photodetector performs measurement of light emitted from the container at all wavelength regions and spectrometry at a specific wavelength range, and/or measurement of light, the intensity of which is changed by the pH modifier.

**2.** The apparatus of claim 1, further comprising the at least one optical filter and the pH modifier.

**3.** The apparatus of claim 1 or 2, further comprising at least one component selected from a group consisting of:

a container holder for the container;
an optical filter holder for supporting the optical filter and inserting the optical filter between the photodetector and the container;
an optical filter position control unit that moves the optical filter holder; and
a photodetector position control unit that moves the photodetector relatively to the container.

**4.** The apparatus of any one of claims 1-3, wherein the optical filter is an interference filter, a dichroic filter, or a combination thereof.

**5.** The apparatus of any one of claims 1-4, wherein the optical filter transmits light at certain wavelength or in a certain wavelength band and reflects light at a shorter wavelength and a longer wavelength than the certain wavelength or wavelength band.

**6.** The apparatus of any one of claims 1-4, wherein the optical filter comprises at least one filter and has center wavelength in a range of 500 nm to 700 nm.

**7.** The apparatus of any one of claims 1-3, wherein the optical filter comprises at least one filter, which is a dichroic filter having a reflected light region of 500 nm or less on the short wavelength side and 600 nm or more on the long wavelength side.

**8.** The apparatus of any one of claims 1-3, wherein the optical filter comprises at least one filter, which is an interference filter having center wavelength of 550 nm to 570 nm and half width of 10 nm to 60 nm.

**9.** The apparatus of any one of claims 1-3, wherein the optical filter comprises two filters, which are a first interference filter having center wavelength of 550 nm to 570 nm and half width of 10 nm to 60 nm and a second interference filter having center wavelength of 600 nm to 630 nm and half width of 10 nm to 60 nm.

**10.** The apparatus of any one of claims 1-3, wherein the optical filter comprises three filters, which are a first interference filter having center wavelength of 550 nm to 570 nm and half width of 10 nm to 60 nm, a second interference filter having center wavelength of 600 nm to 630 nm and half width of 10 nm to 60 nm, and a third interference filter having center wavelength of 650 nm to 680 nm and half width of 10 nm to 60 nm.

**11.** The apparatus of any one of claims 1-3, wherein the optical filter comprises four filters, which are a first interference filter having center wavelength of 430 nm to 480 nm and half width of 10 nm to 60 nm, a second interference filter having center wavelength of 550 nm to 570 nm and half width of 10 nm to 60 nm, a third interference filter having center wavelength of 600 nm to 630 nm and half width of 10 nm to 60 nm, and a fourth interference filter having center wavelength of 650 nm to 680 nm and half width of 10 nm to 60 nm.

**12.** The apparatus of any one of claims 1-11, wherein the pH modifier changes solution pH of the sample from pH 7.0 to pH 7.2.

**13.** The apparatus of any one of claims 1-12, wherein the pH modifier changes solution pH of the sample from pH 7.0 to pH 6.4.

**14.** The apparatus of any one of claims 1-13, wherein the pH modifier changes solution pH of the sample from pH 7.0 or pH 7.2 to pH 8.5.

**15.** The apparatus of any one of claims 1-14, wherein the luminescence is chemoluminescence or bioluminescence.

**16.** An apparatus for counting microbes in a sample, comprising:

a container for a sample;
a photodetector for detecting luminescence from the container; and
at least one optical filter inserted between the photodetector and the container, and/or a pH modifier added to the container,
wherein the container contains a solution for processing ATP chemoluminescence introduced therein, the photodetector performs measurement of light emitted from the container at all wavelength regions and spectrometry at a specific wavelength range, and/or measurement of light, the intensity of which is changed by the pH modifier, and
the apparatus measures, from a result of the measurement, the luminescence intensity of ATP from the sample and counts microbes in the sample.

Fig. 1A

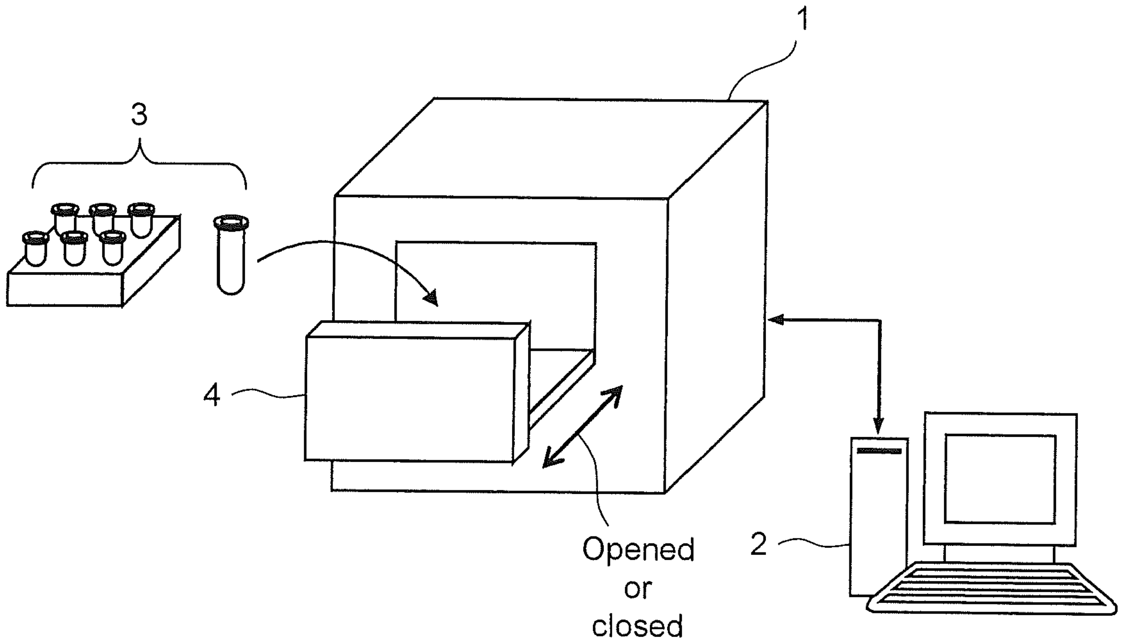

Fig. 1B

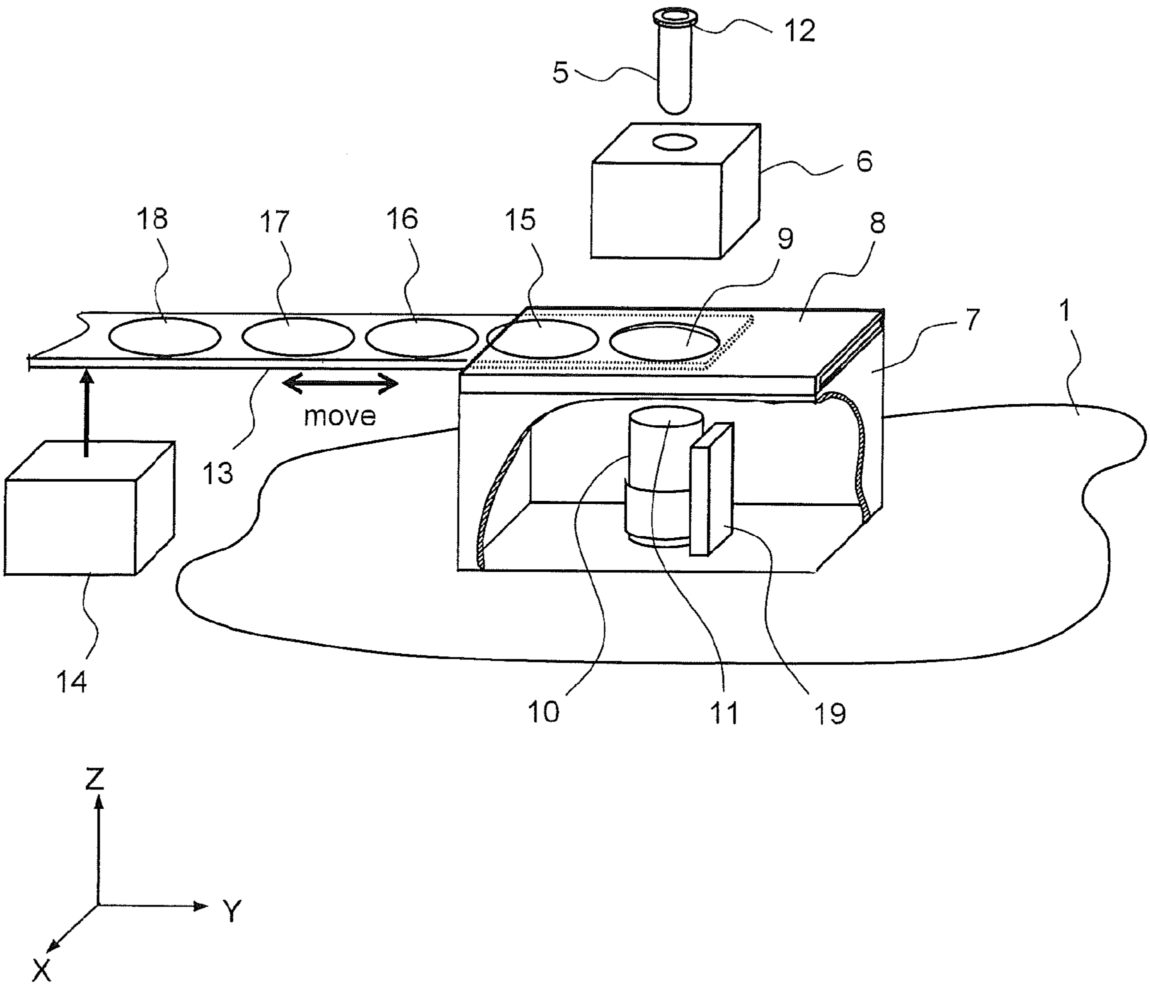

Fig. 1C

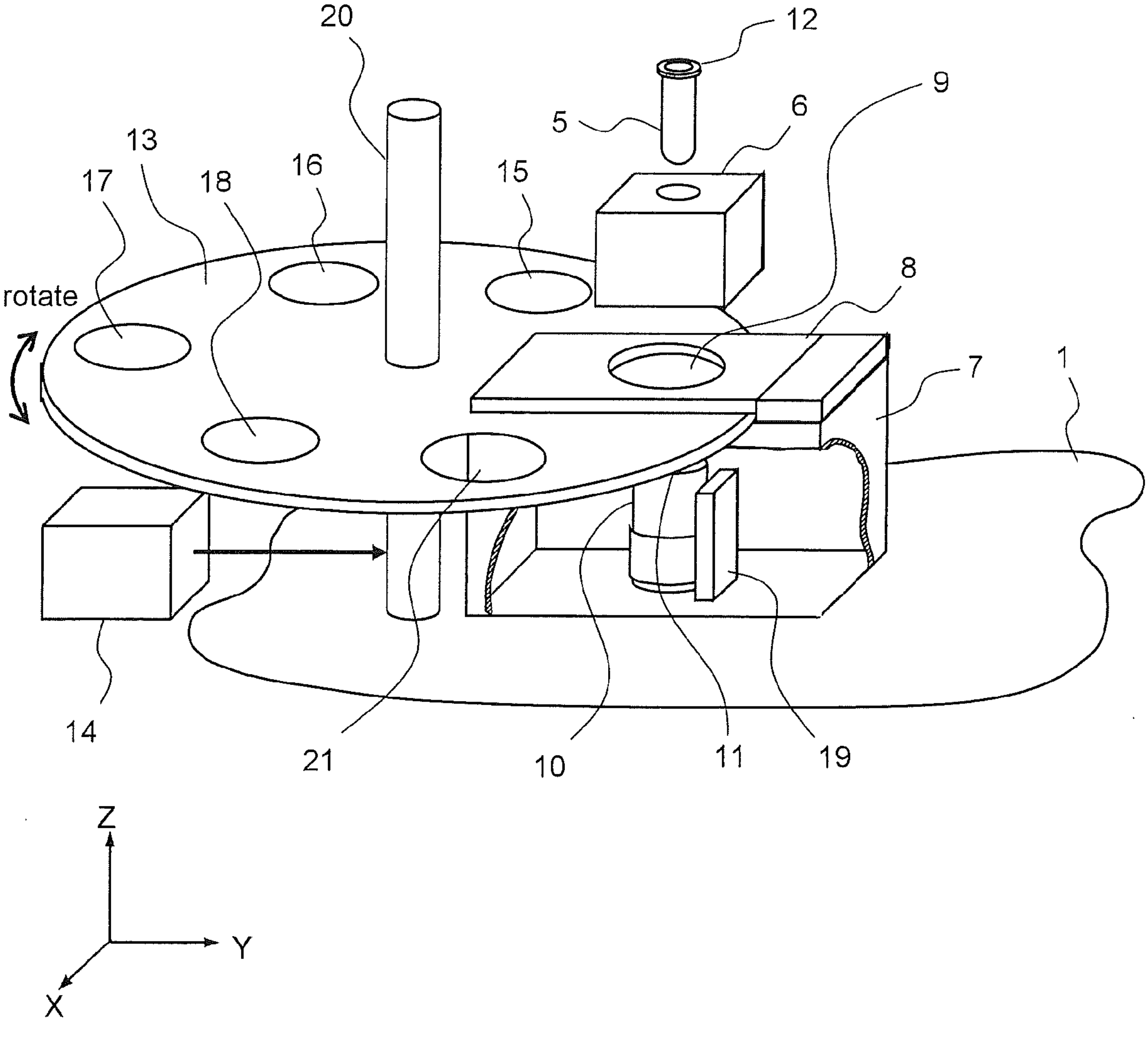

Fig. 2A

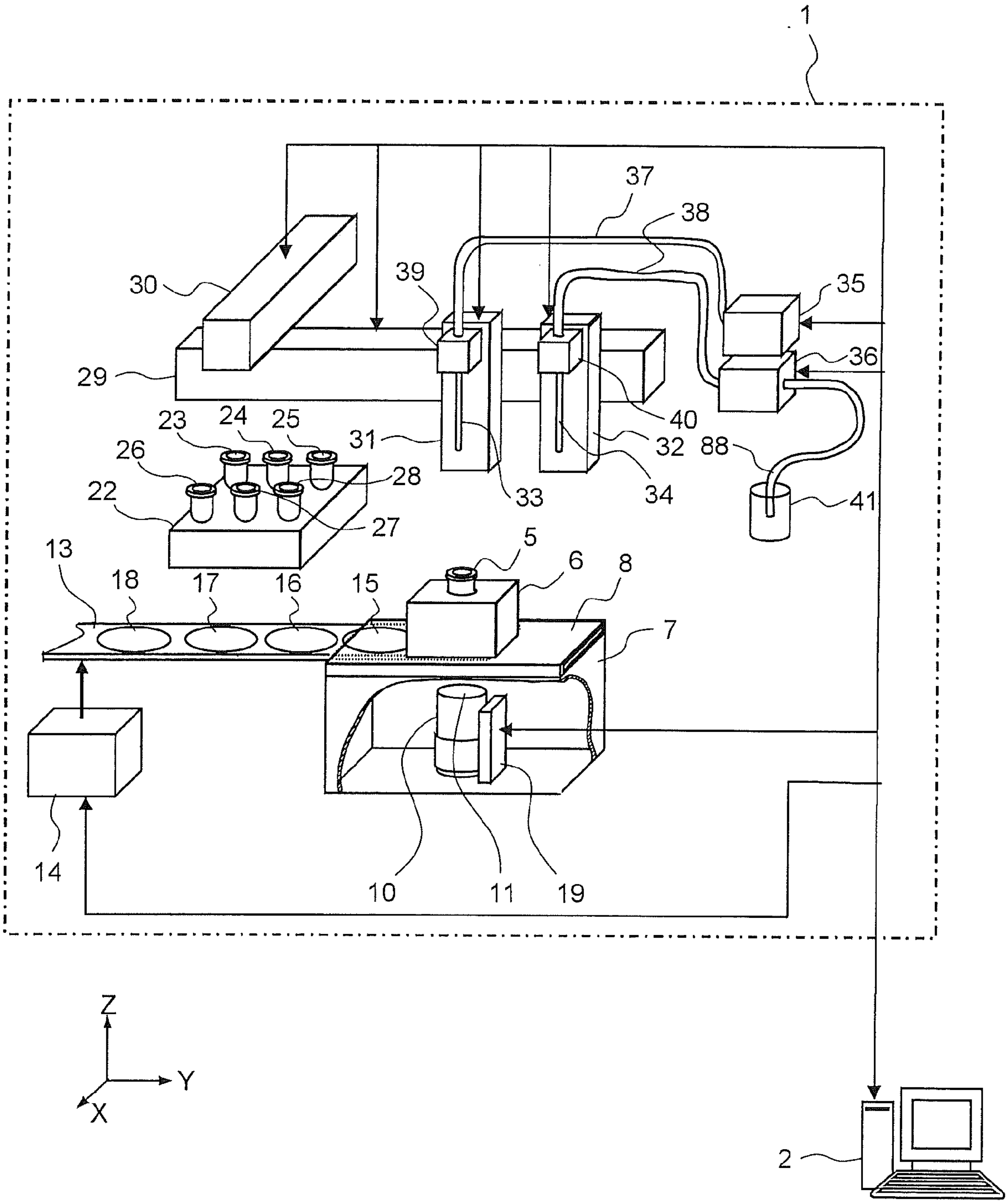
1
37
38
30
39
35
36
29
40
23
24
25
31
32
88
26
28
33
34
41
22
27
13
5
6
8
18
17
16
15
7
14
10
11
19
Z
Y
X
2

Fig. 2B

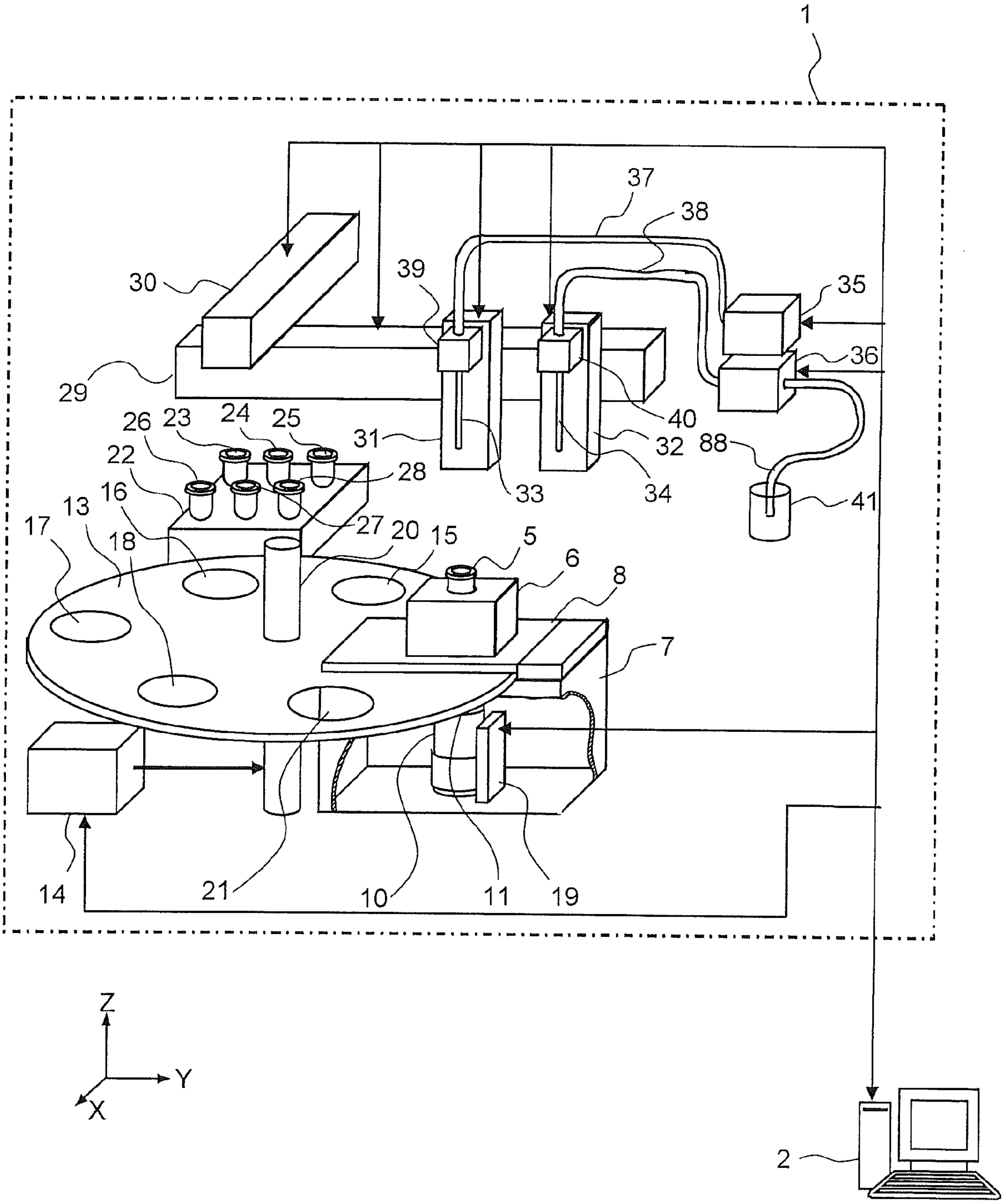
1
37
38
39
35
30
36
29
26
23
24
25
31
40
32
88
22
28
33
34
41
13
16
27
20
17
18
15
5
6
8
7
14
21
10
11
19
Z
Y
X
2

Fig. 3

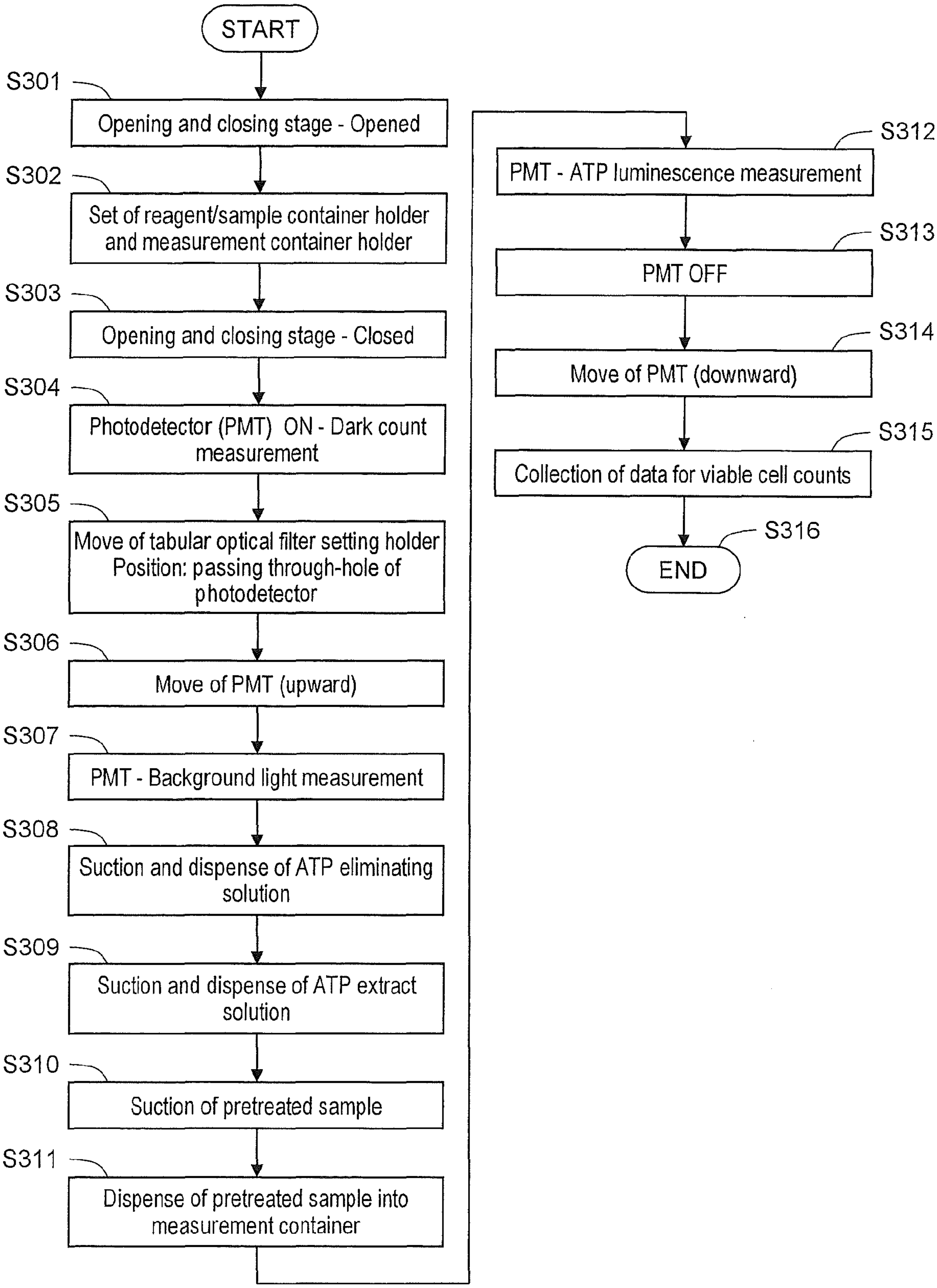
START
S301
Opening and closing stage - Opened
S302
Set of reagent/sample container holder and measurement container holder
S303
Opening and closing stage - Closed
S304
Photodetector (PMT) ON - Dark count measurement
S305
Move of tabular optical filter setting holder Position: passing through-hole of photodetector
S306
Move of PMT (upward)
S307
PMT - Background light measurement
S308
Suction and dispense of ATP eliminating solution
S309
Suction and dispense of ATP extract solution
S310
Suction of pretreated sample
S311
Dispense of pretreated sample into measurement container
S312
PMT - ATP luminescence measurement
S313
PMT OFF
S314
Move of PMT (downward)
S315
Collection of data for viable cell counts
S316
END

Fig. 4A

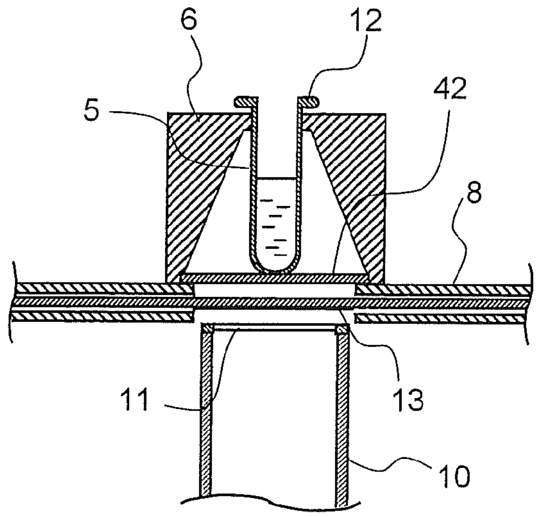


Fig. 4B

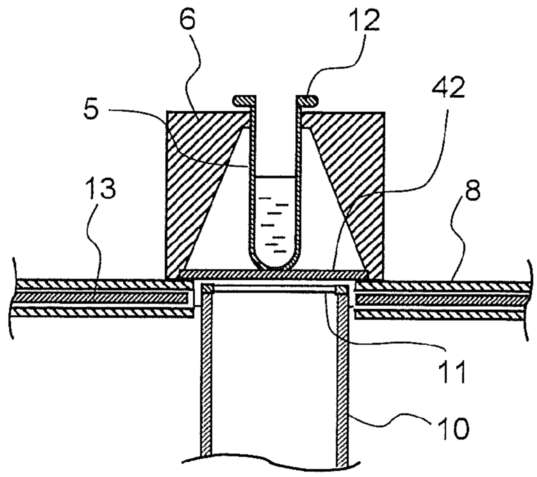


Fig. 4C

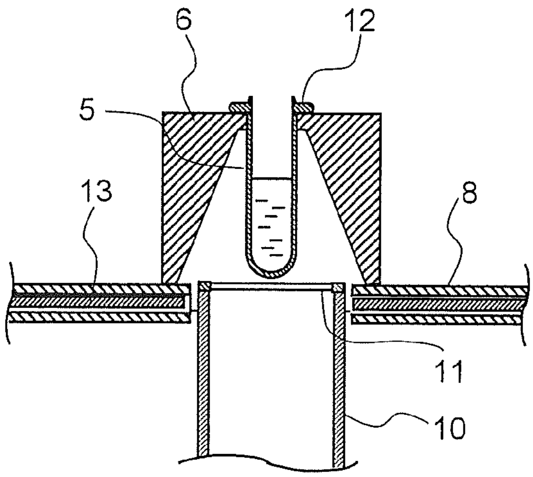

Fig. 4D

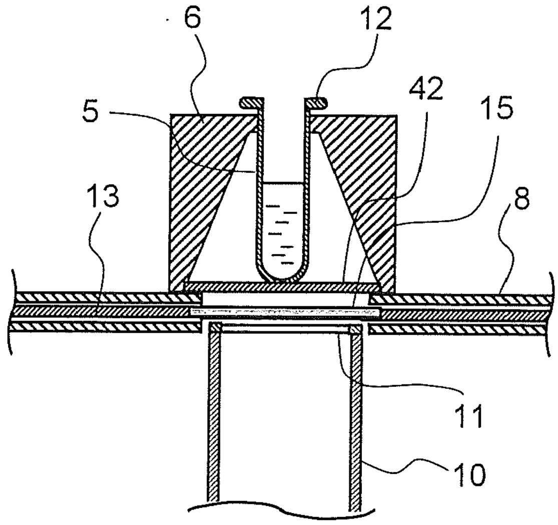


Fig. 4E

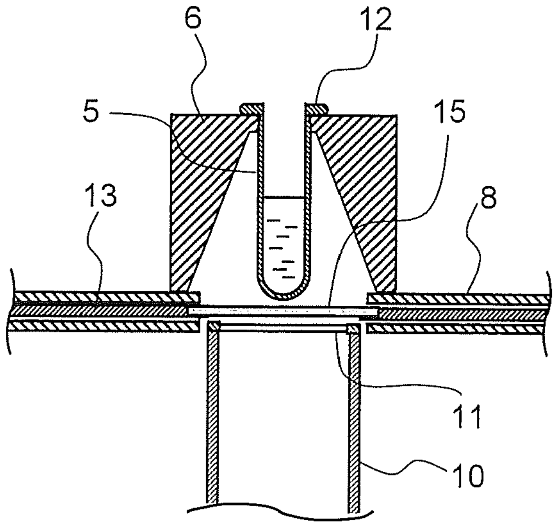

Fig. 5

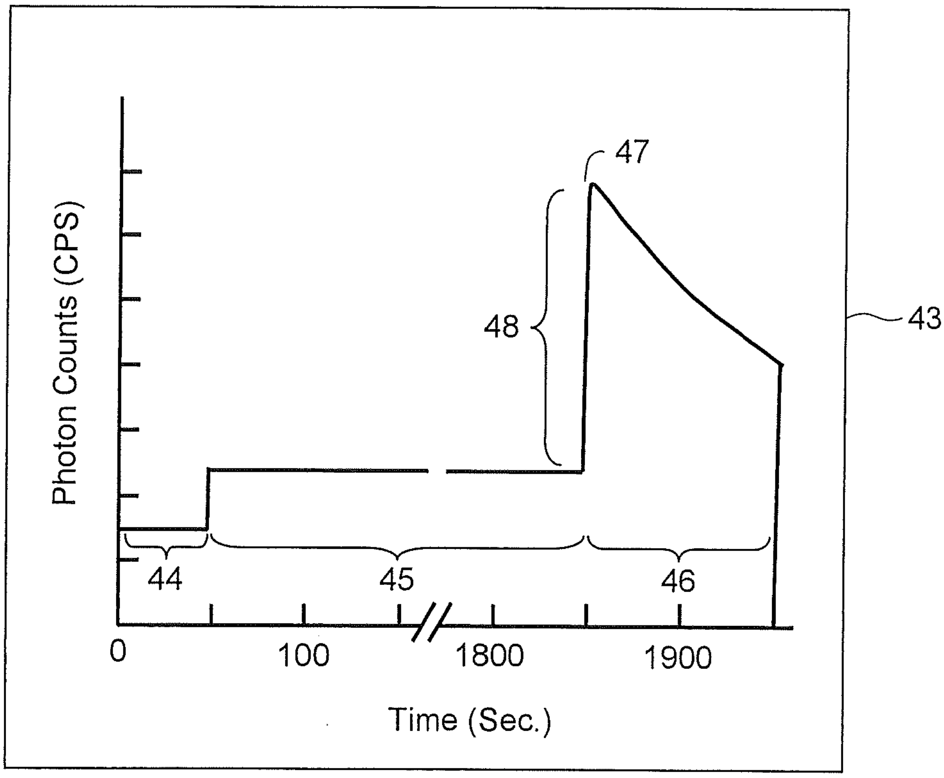

Fig. 6

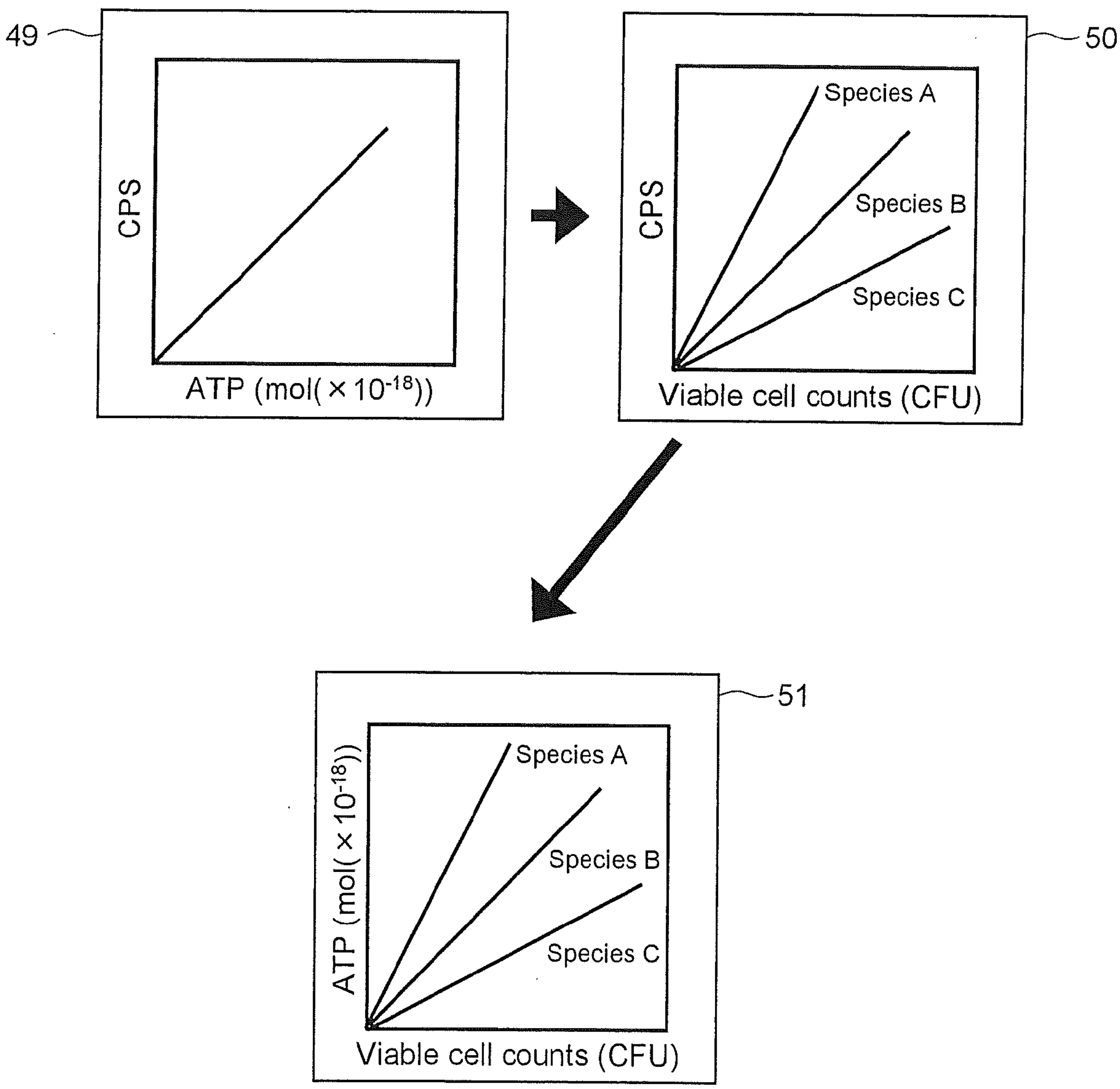
49
CPS
ATP (mol(×10-18))
50
CPS
Species A
Species B
Species C
Viable cell counts (CFU)
51
ATP (mol(×10-18))
Species A
Species B
Species C
Viable cell counts (CFU)

Fig. 7A

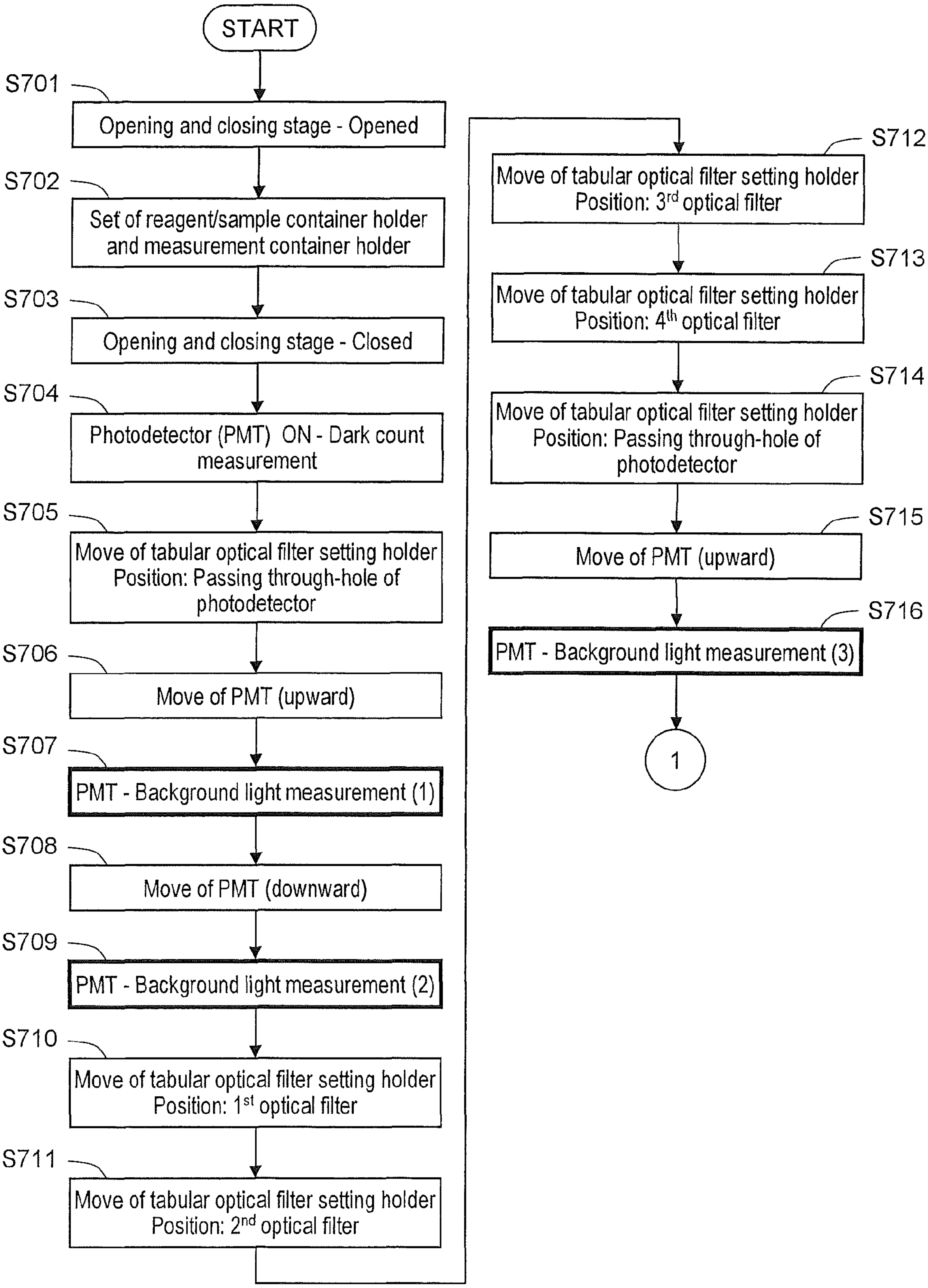
START
S701
Opening and closing stage - Opened
S702
Set of reagent/sample container holder and measurement container holder
S703
Opening and closing stage - Closed
S704
Photodetector (PMT) ON - Dark count measurement
S705
Move of tabular optical filter setting holder Position: Passing through-hole of photodetector
S706
Move of PMT (upward)
S707
PMT - Background light measurement (1)
S708
Move of PMT (downward)
S709
PMT - Background light measurement (2)
S710
Move of tabular optical filter setting holder Position: 1st optical filter
S711
Move of tabular optical filter setting holder Position: 2nd optical filter
S712
Move of tabular optical filter setting holder Position: 3rd optical filter
S713
Move of tabular optical filter setting holder Position: 4th optical filter
S714
Move of tabular optical filter setting holder Position: Passing through-hole of photodetector
S715
Move of PMT (upward)
S716
PMT - Background light measurement (3)
1

Fig. 7B

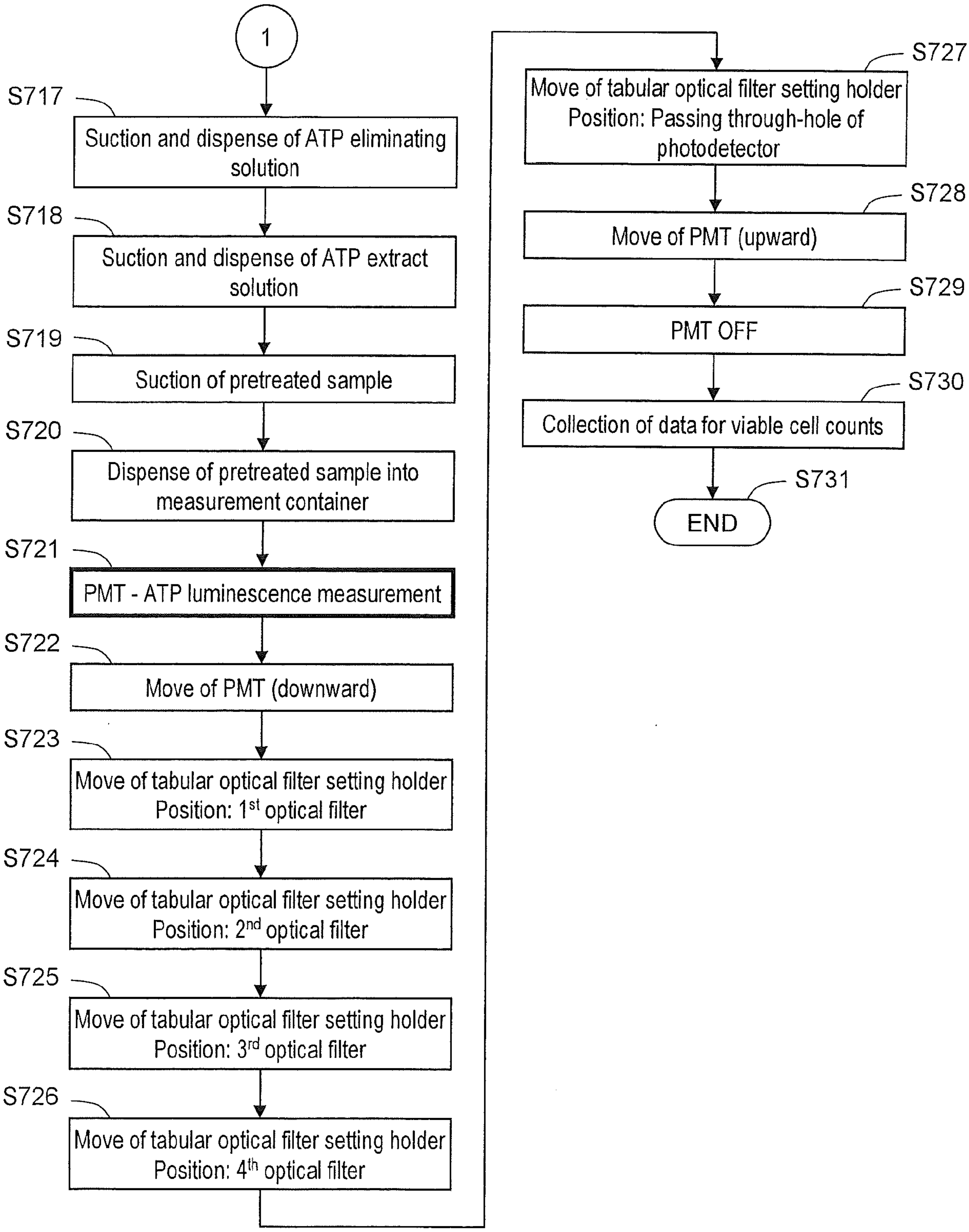
1
S717
Suction and dispense of ATP eliminating solution
S718
Suction and dispense of ATP extract solution
S719
Suction of pretreated sample
S720
Dispense of pretreated sample into measurement container
S721
PMT - ATP luminescence measurement
S722
Move of PMT (downward)
S723
Move of tabular optical filter setting holder Position: 1st optical filter
S724
Move of tabular optical filter setting holder Position: 2nd optical filter
S725
Move of tabular optical filter setting holder Position: 3rd optical filter
S726
Move of tabular optical filter setting holder Position: 4th optical filter
S727
Move of tabular optical filter setting holder Position: Passing through-hole of photodetector
S728
Move of PMT (upward)
S729
PMT OFF
S730
Collection of data for viable cell counts
S731
END

Fig. 8A

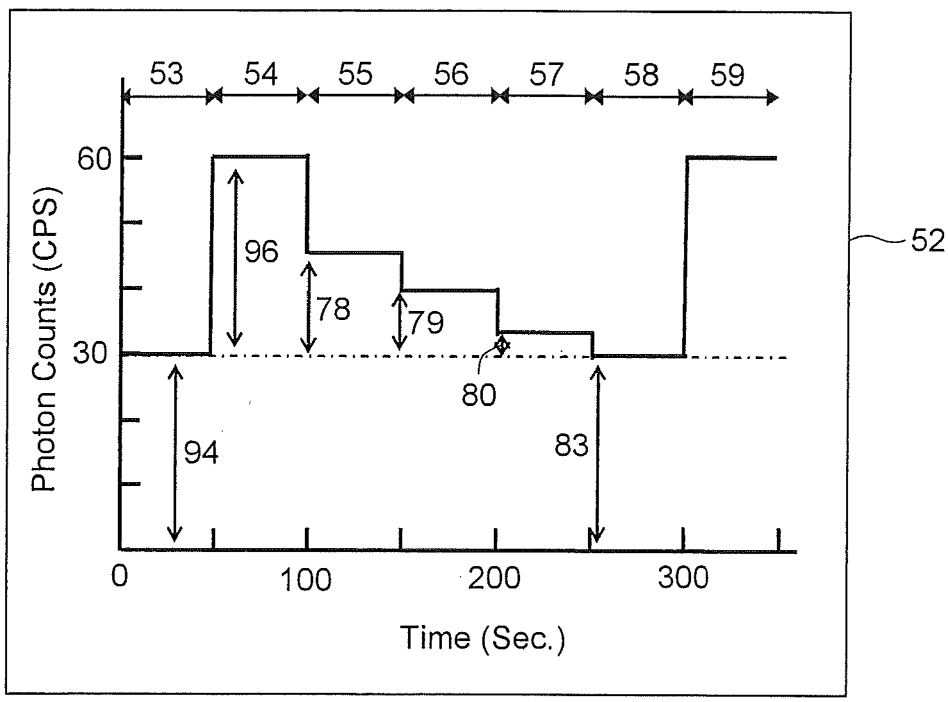
53
54
55
56
57
58
59
60
30
Photon Counts (CPS)
96
78
79
80
94
83
52
0
100
200
300
Time (Sec.)

Fig. 8B

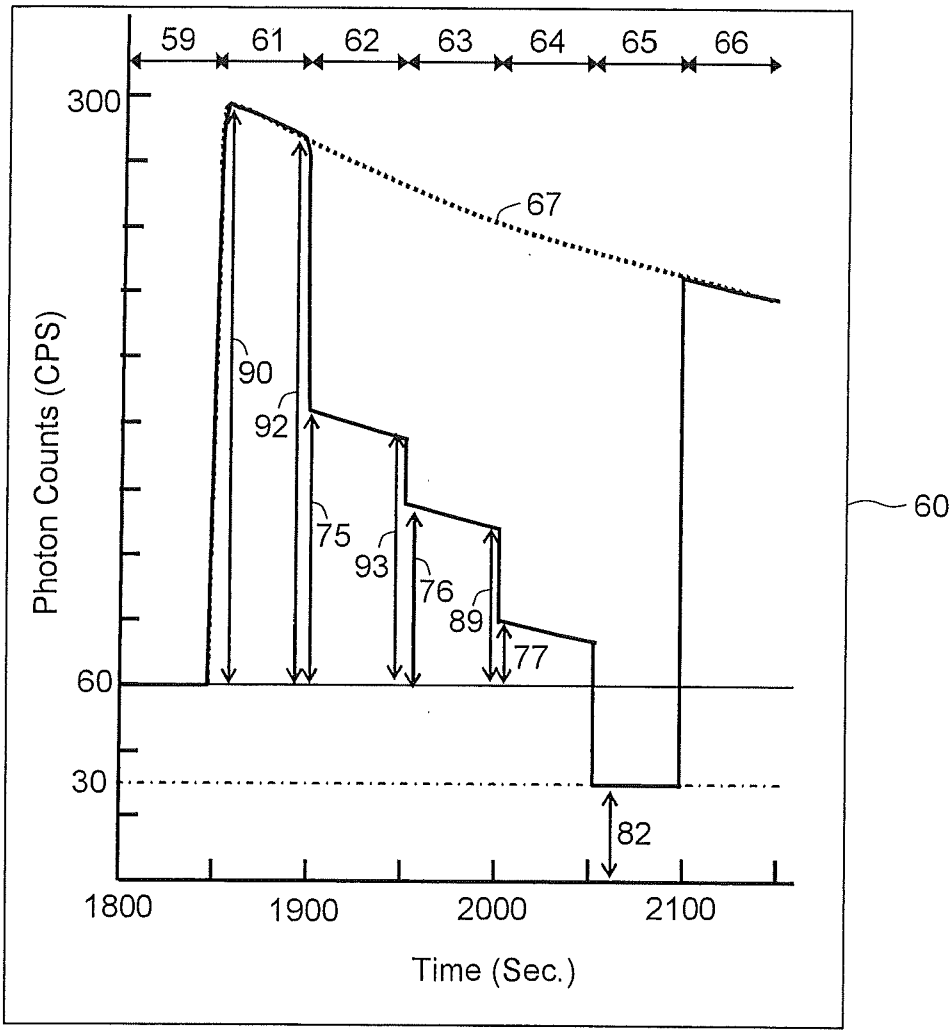

59
61
62
63
64
65
66
300
60
30
Photon Counts (CPS)
67
90
92
75
93
76
89
77
82
60
1800
1900
2000
2100
Time (Sec.)

Fig. 9A

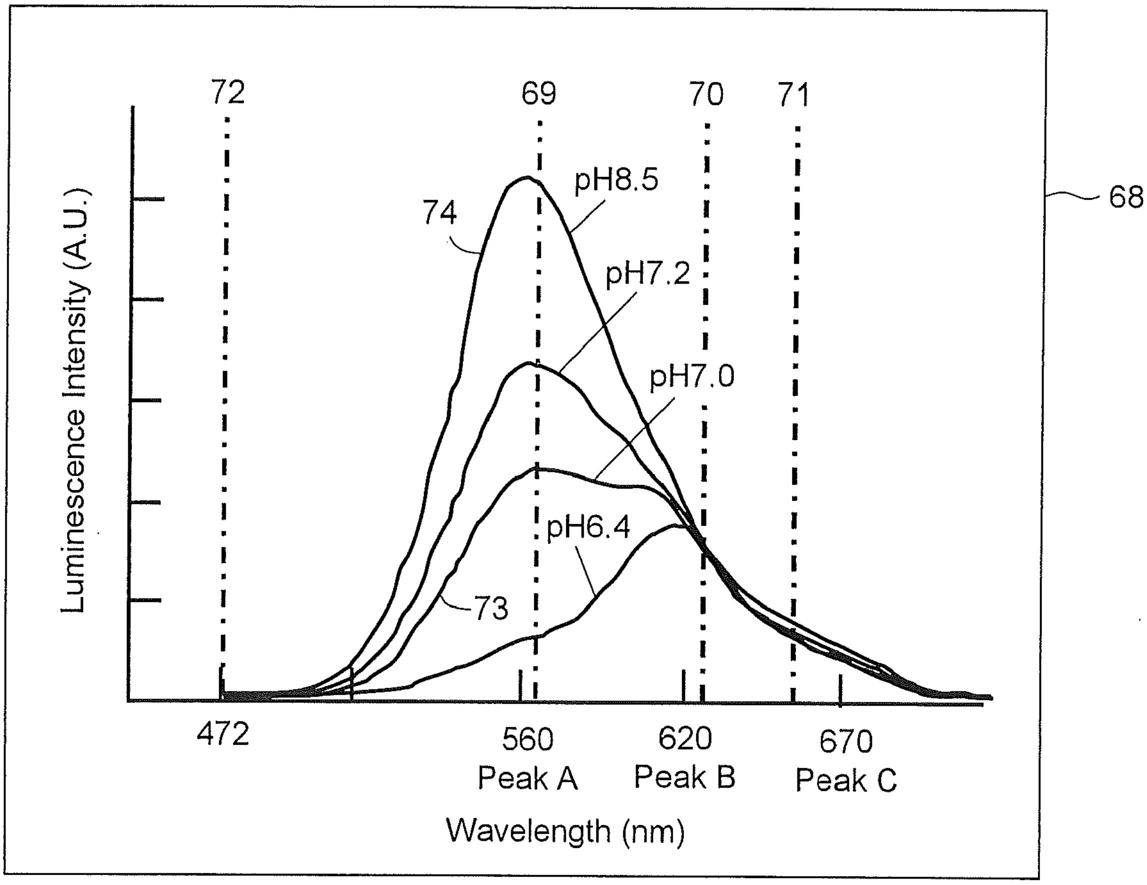
72
69
70
71
68
pH8.5
74
pH7.2
pH7.0
pH6.4
73
Luminescence Intensity (A.U.)
472
560
Peak A
620
Peak B
670
Peak C
Wavelength (nm)

Fig. 9B

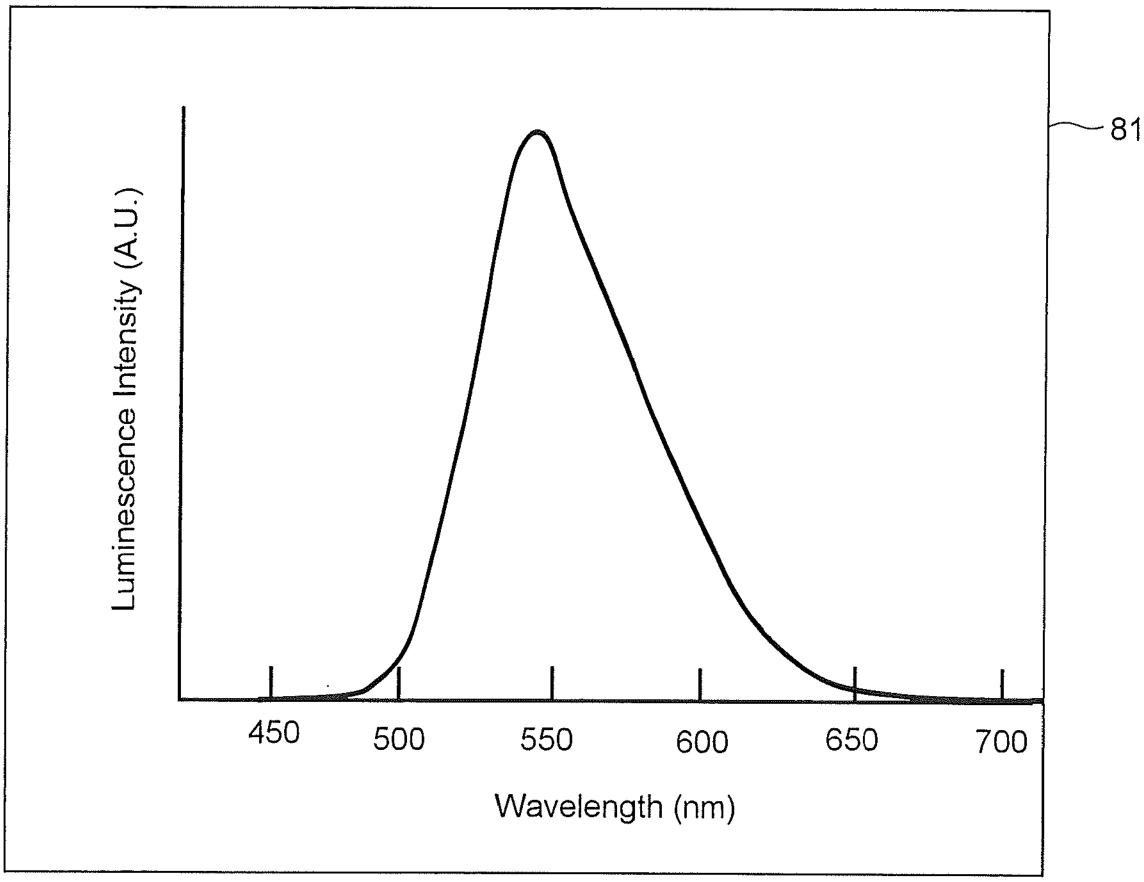
81
Luminescence Intensity (A.U.)
450
500
550
600
650
700
Wavelength (nm)

Fig. 10A

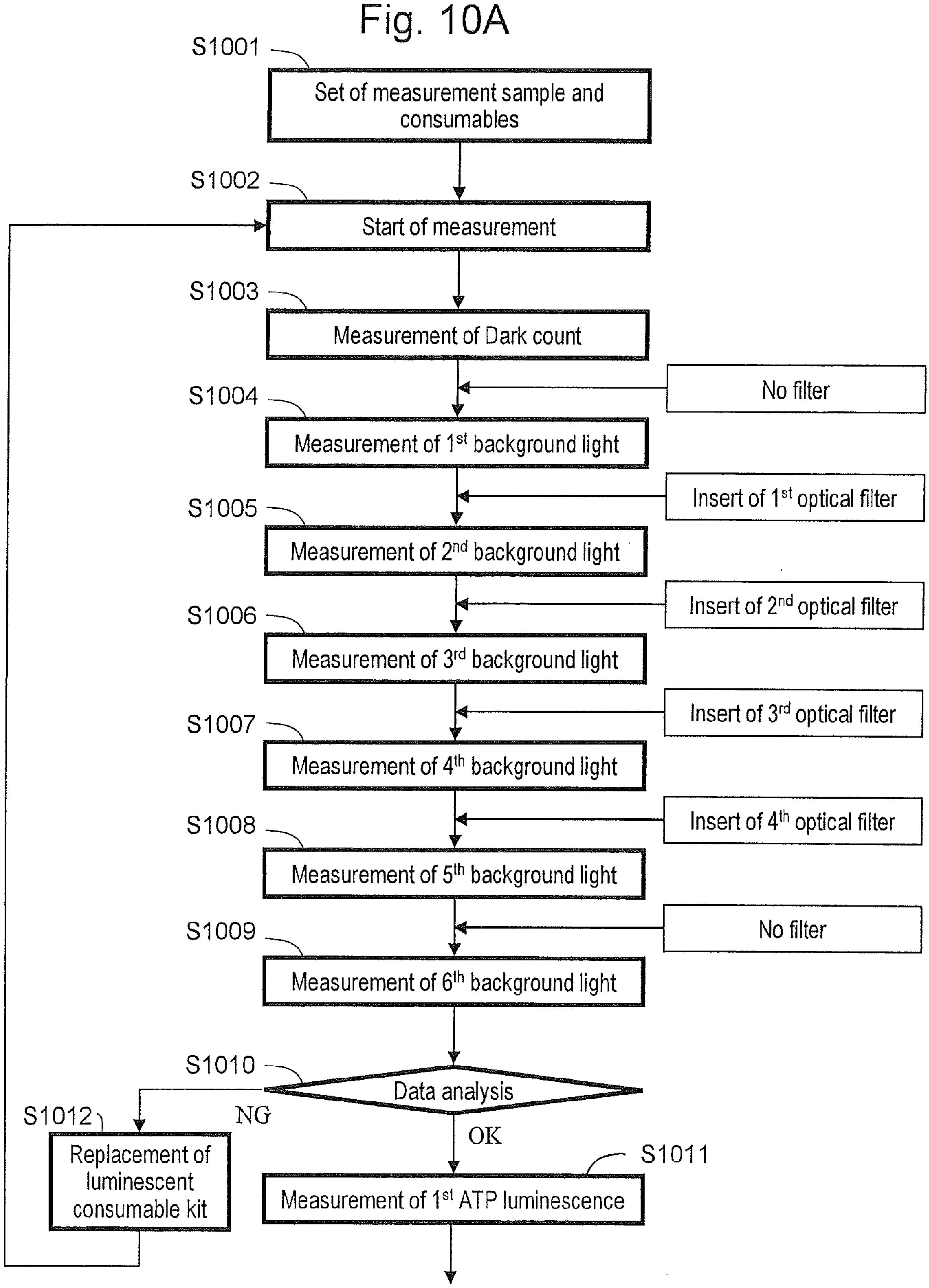
S1001
Set of measurement sample and consumables
S1002
Start of measurement
S1003
Measurement of Dark count
No filter
S1004
Measurement of 1st background light
Insert of 1st optical filter
S1005
Measurement of 2nd background light
Insert of 2nd optical filter
S1006
Measurement of 3rd background light
Insert of 3rd optical filter
S1007
Measurement of 4th background light
Insert of 4th optical filter
S1008
Measurement of 5th background light
No filter
S1009
Measurement of 6th background light
S1010
Data analysis
NG
OK
S1012
Replacement of luminescent consumable kit
S1011
Measurement of 1st ATP luminescence

Fig. 10B

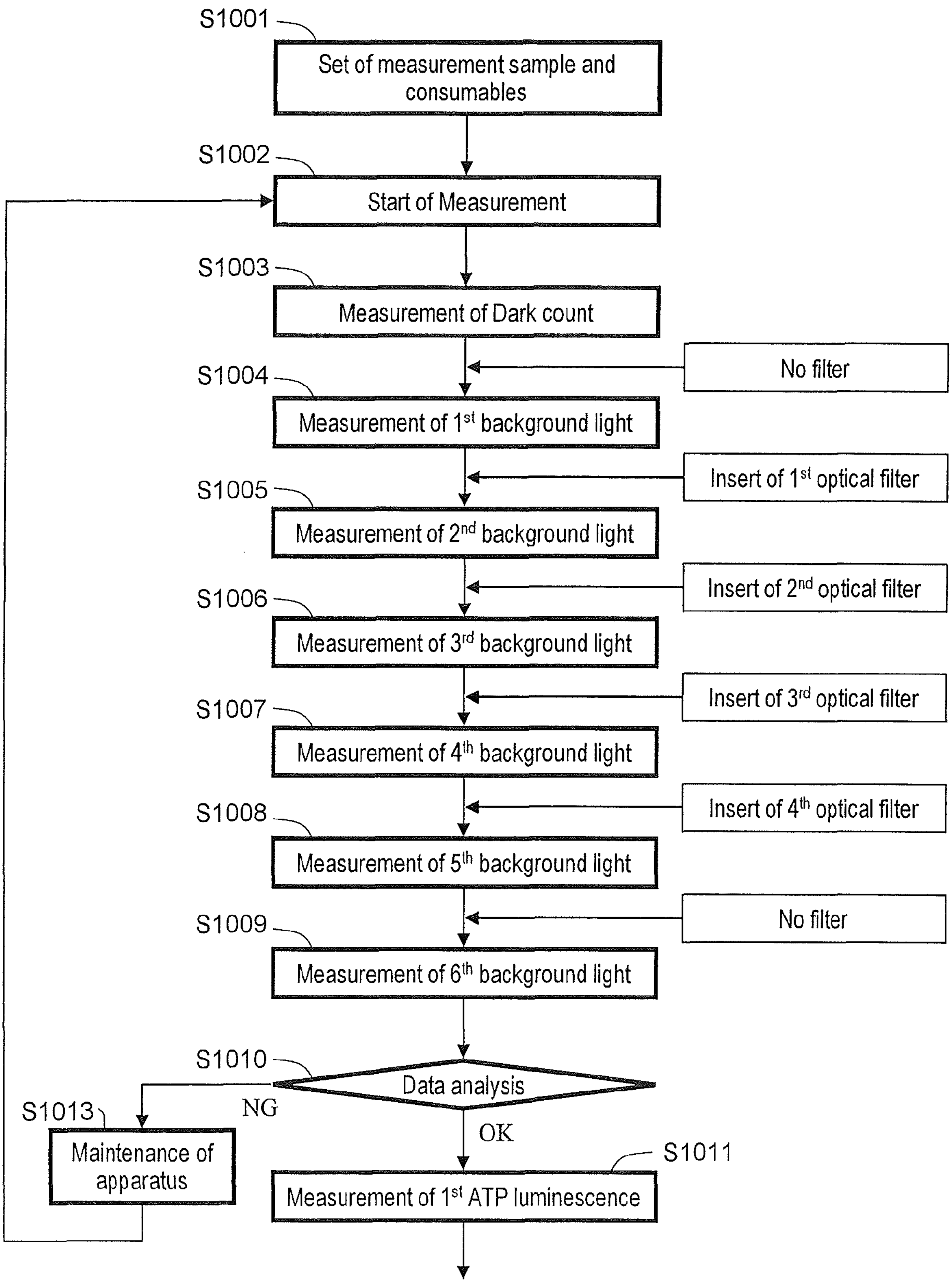
S1001
Set of measurement sample and consumables
S1002
Start of Measurement
S1003
Measurement of Dark count
No filter
S1004
Measurement of 1st background light
Insert of 1st optical filter
S1005
Measurement of 2nd background light
Insert of 2nd optical filter
S1006
Measurement of 3rd background light
Insert of 3rd optical filter
S1007
Measurement of 4th background light
Insert of 4th optical filter
S1008
Measurement of 5th background light
No filter
S1009
Measurement of 6th background light
S1010
Data analysis
NG
OK
S1013
Maintenance of apparatus
S1011
Measurement of 1st ATP luminescence

Fig. 10C

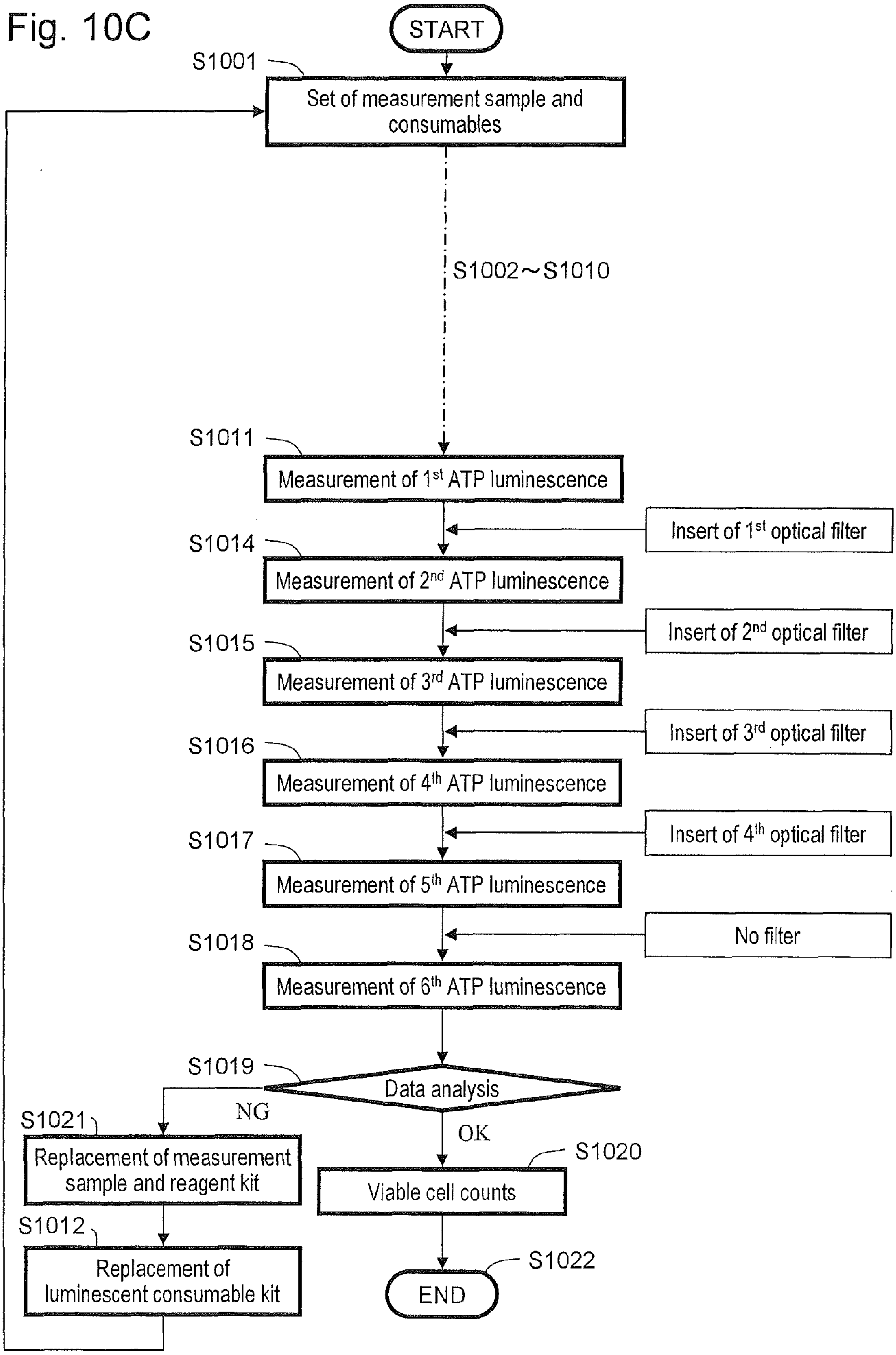
START
S1001
Set of measurement sample and consumables
S1002~S1010
S1011
Measurement of 1st ATP luminescence
Insert of 1st optical filter
S1014
Measurement of 2nd ATP luminescence
Insert of 2nd optical filter
S1015
Measurement of 3rd ATP luminescence
Insert of 3rd optical filter
S1016
Measurement of 4th ATP luminescence
Insert of 4th optical filter
S1017
Measurement of 5th ATP luminescence
No filter
S1018
Measurement of 6th ATP luminescence
S1019
Data analysis
NG
OK
S1021
Replacement of measurement sample and reagent kit
S1012
Replacement of luminescent consumable kit
S1020
Viable cell counts
S1022
END

Fig. 11

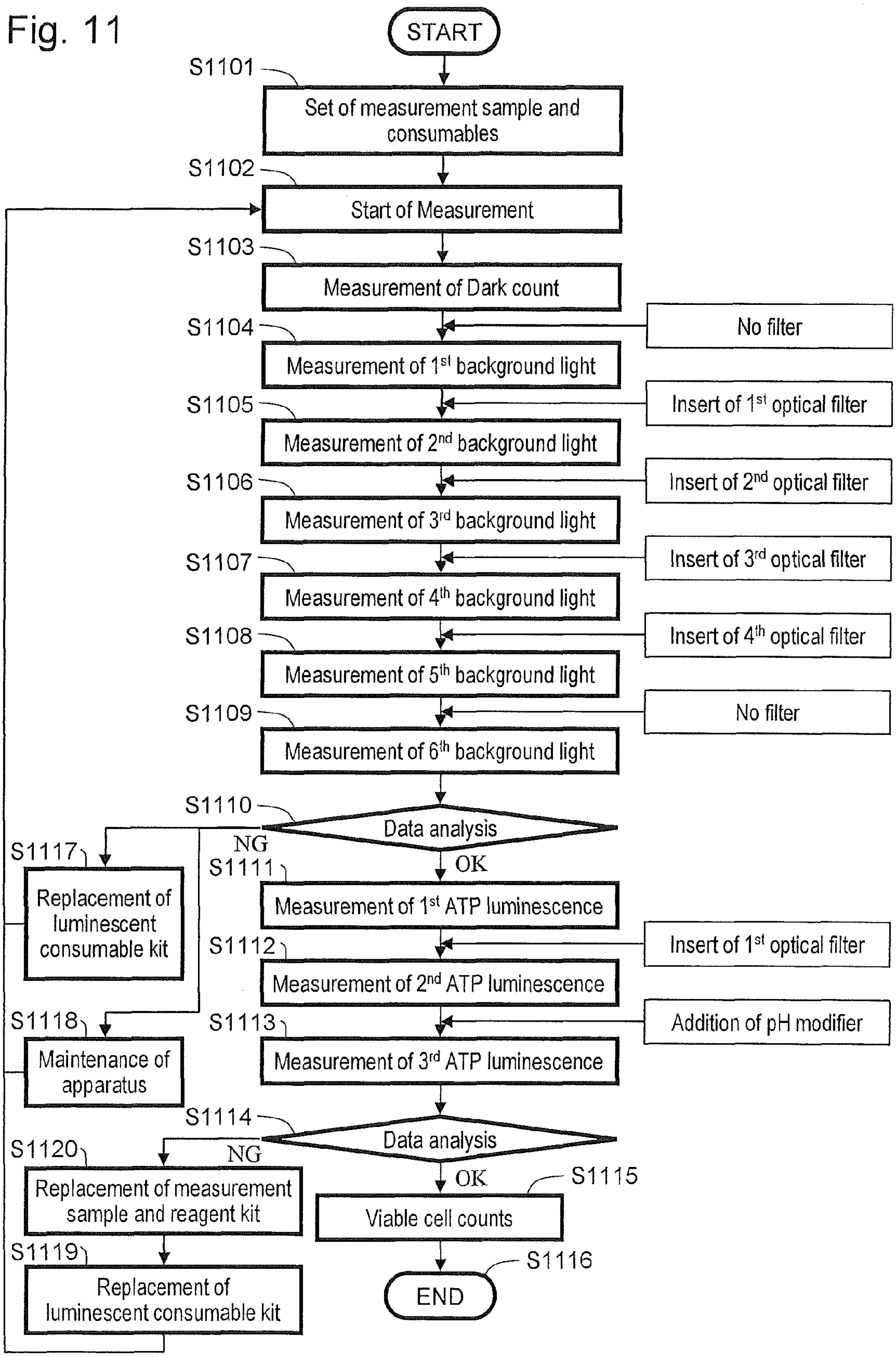
START
S1101
Set of measurement sample and consumables
S1102
Start of Measurement
S1103
Measurement of Dark count
S1104
No filter
Measurement of 1st background light
S1105
Insert of 1st optical filter
Measurement of 2nd background light
S1106
Insert of 2nd optical filter
Measurement of 3rd background light
S1107
Insert of 3rd optical filter
Measurement of 4th background light
S1108
Insert of 4th optical filter
Measurement of 5th background light
S1109
No filter
Measurement of 6th background light
S1110
Data analysis
NG
OK
S1117
Replacement of luminescent consumable kit
S1118
Maintenance of apparatus
S1111
Measurement of 1st ATP luminescence
S1112
Insert of 1st optical filter
Measurement of 2nd ATP luminescence
S1113
Addition of pH modifier
Measurement of 3rd ATP luminescence
S1114
Data analysis
NG
OK
S1120
Replacement of measurement sample and reagent kit
S1119
Replacement of luminescent consumable kit
S1115
Viable cell counts
S1116
END

Fig. 12A

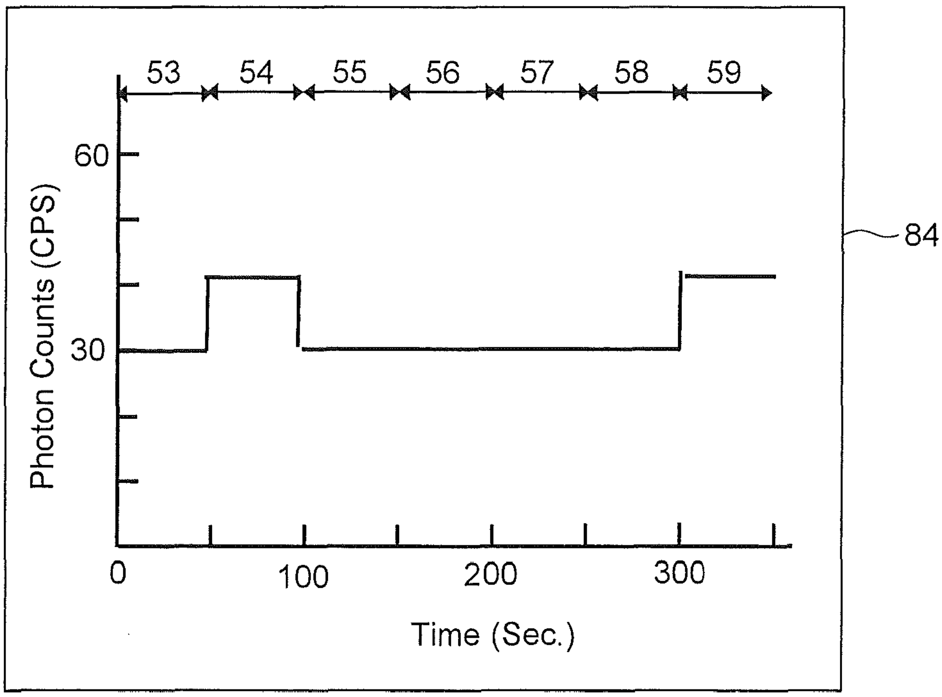
53
54
55
56
57
58
59
60
30
Photon Counts (CPS)
0
100
200
300
Time (Sec.)
84

Fig. 12B

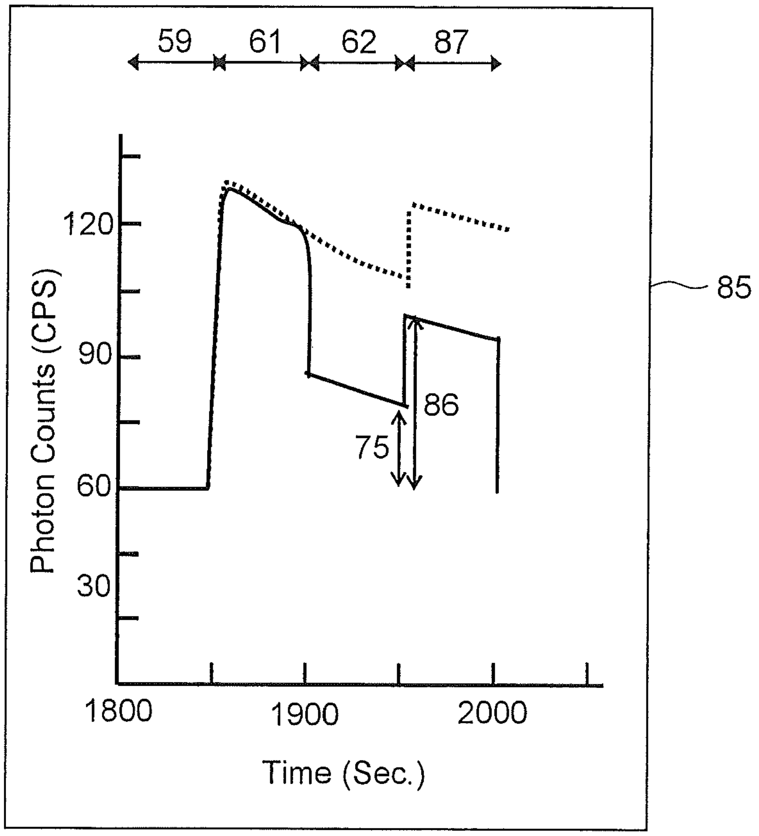
59
61
62
87
120
90
60
30
Photon Counts (CPS)
86
75
85
1800
1900
2000
Time (Sec.)

# Fig. 13A

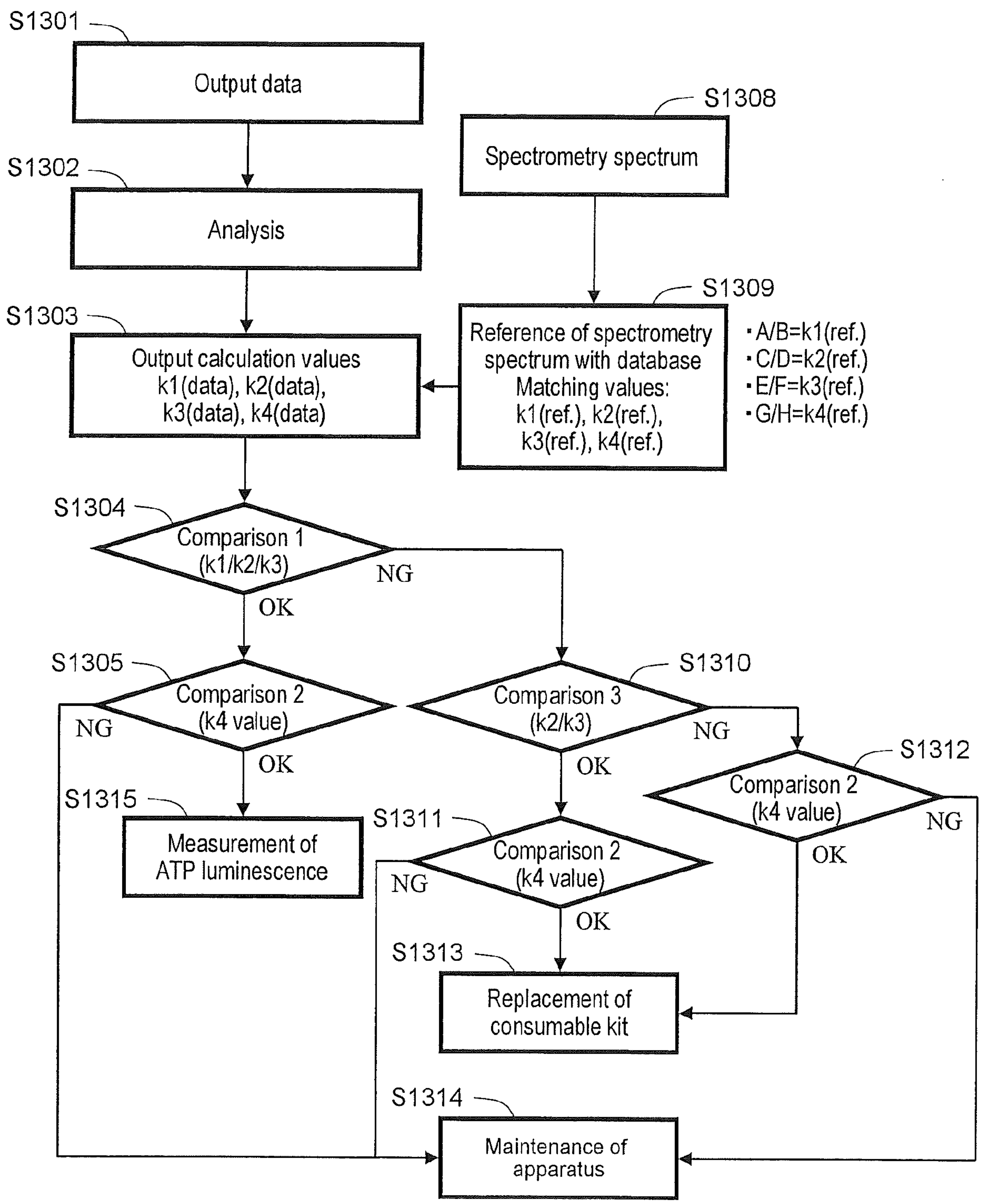
S1301
Output data
S1302
Analysis
S1303
Output calculation values
k1(data), k2(data),
k3(data), k4(data)
S1308
Spectrometry spectrum
S1309
Reference of spectrometry
spectrum with database
Matching values:
k1(ref.), k2(ref.),
k3(ref.), k4(ref.)
・A/B=k1(ref.)
・C/D=k2(ref.)
・E/F=k3(ref.)
・G/H=k4(ref.)
S1304
Comparison 1
(k1/k2/k3)
NG
OK
S1305
Comparison 2
(k4 value)
NG
OK
S1310
Comparison 3
(k2/k3)
NG
OK
S1312
Comparison 2
(k4 value)
NG
OK
S1315
Measurement of
ATP luminescence
S1311
Comparison 2
(k4 value)
NG
OK
S1313
Replacement of
consumable kit
S1314
Maintenance of
apparatus

Fig. 13B

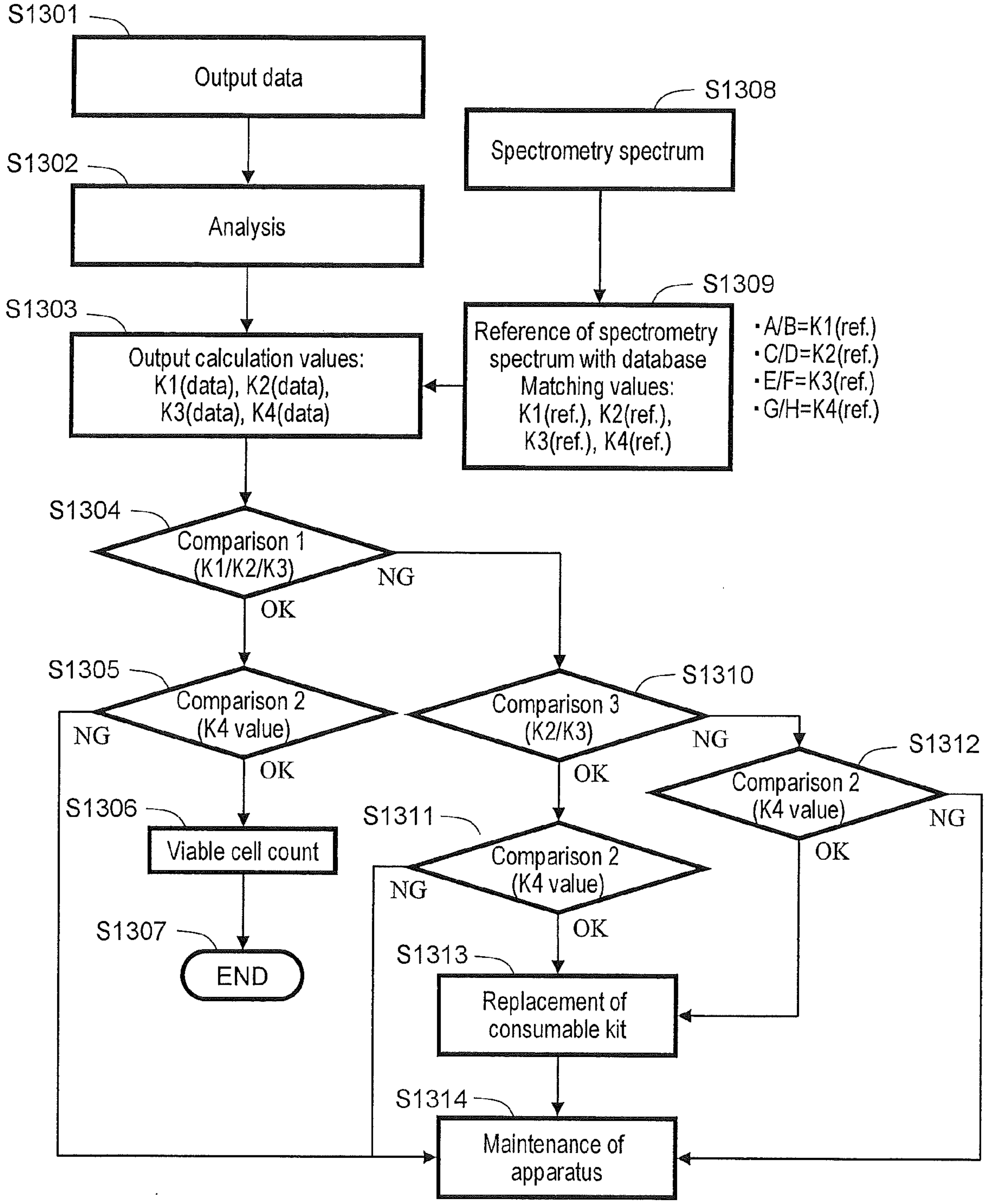
S1301
Output data
S1302
Analysis
S1303
Output calculation values:
K1(data), K2(data),
K3(data), K4(data)
S1308
Spectrometry spectrum
S1309
Reference of spectrometry spectrum with database
Matching values:
K1(ref.), K2(ref.),
K3(ref.), K4(ref.)
・A/B=K1(ref.)
・C/D=K2(ref.)
・E/F=K3(ref.)
・G/H=K4(ref.)
S1304
Comparison 1
(K1/K2/K3)
NG
OK
S1305
Comparison 2
(K4 value)
NG
OK
S1306
Viable cell count
S1307
END
S1310
Comparison 3
(K2/K3)
NG
OK
S1311
Comparison 2
(K4 value)
NG
OK
S1312
Comparison 2
(K4 value)
NG
OK
S1313
Replacement of consumable kit
S1314
Maintenance of apparatus

Europäisches Patentamt
European Patent Office
Office européen des brevets

# EUROPEAN SEARCH REPORT

Application Number
EP 12 16 2216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/261294 A1 (NODA HIDEYUKI [JP] ET AL) 23 October 2008 (2008-10-23)<br>* paragraph [0066] - paragraph [0071]; figure 4 *<br>* paragraph [0075] - paragraph [0082]; figure 6 *<br>* paragraphs [0084], [0085], [0088] - [0093] * | 3,16 | INV.<br>G01N21/76<br>C12Q1/68<br>G02B21/00 |
| X<br><br>Y | US 5 447 687 A (LEWIS SCOTT C [US] ET AL) 5 September 1995 (1995-09-05)<br>* column 1, line 12 - column 2, line 32 *<br>* column 3, line 4 - column 6, line 18; figure 1A * | 1,2,4-15<br><br>3,16 | |
| Y | US 5 347 122 A (ANSORGE RICHARD E [GB] ET AL) 13 September 1994 (1994-09-13)<br>* column 1, line 8 - line 18 *<br>* column 6, line 28 - line 58 *<br>* column 8, line 47 - line 63; figures 6,7 * | 3 | |
| | | | TECHNICAL FIELDS SEARCHED (IPC) |
| A | US 5 837 195 A (MALEK MICHAEL L [US] ET AL) 17 November 1998 (1998-11-17)<br>* column 1, line 45 - column 2, line 39 * | 1-16 | G01N<br>C12Q<br>G02B |
| A | US 2001/033381 A1 (STUMBO DAVID P [US] ET AL) 25 October 2001 (2001-10-25)<br>* paragraph [0076] - paragraph [0084]; figures 9,10,12 * | 1-16 | |
| A | US 2006/008860 A1 (FAN FRANK [US] ET AL) 12 January 2006 (2006-01-12)<br>* paragraph [0008] - paragraph [0013] *<br>* paragraph [0088] - paragraph [0093] *<br>* paragraph [0100] - paragraph [0104] *<br>* figure 9; example 9 * | 1-16 | |
| | -/-- | | |

The present search report has been drawn up for all claims

| Place of search | Date of completion of the search | Examiner |
|---|---|---|
| Munich | 29 June 2012 | Consalvo, Daniela |

4

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 12 16 2216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 042 785 A (HARJU RAIMO [FI]) 28 March 2000 (2000-03-28)<br>* column 8, line 16 - line 41; figures 5,6 *<br>* column 10, line 37 - line 53; figures 7,11 *<br>----- | 1-16 | |
| A | US 2007/183931 A1 (STOCK DANIEL M [AT] ET AL) 9 August 2007 (2007-08-09)<br>* paragraphs [0081], [0082]; figure 9 *<br>----- | 1-16 | |
| | | | TECHNICAL FIELDS SEARCHED (IPC) |

The present search report has been drawn up for all claims

| Place of search | Date of completion of the search | Examiner |
|---|---|---|
| Munich | 29 June 2012 | Consalvo, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

4

EPO FORM 1503 03.82 (P04C01)

## ANNEX TO THE EUROPEAN SEARCH REPORT ON EUROPEAN PATENT APPLICATION NO. EP 12 16 2216

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2012

| Patent document cited in search report | Publication date | Patent family member(s) | Publication date |
|---|---|---|---|
| US 2008261294 A1 | 23-10-2008 | CN 101290294 A | 22-10-2008 |
| | | JP 2008268019 A | 06-11-2008 |
| | | US 2008261294 A1 | 23-10-2008 |
| | | US 2011091355 A1 | 21-04-2011 |
| US 5447687 A | 05-09-1995 | AU 687363 B2 | 26-02-1998 |
| | | AU 5187393 A | 22-09-1994 |
| | | CA 2111552 A1 | 20-09-1994 |
| | | EP 0616208 A1 | 21-09-1994 |
| | | JP 6300696 A | 28-10-1994 |
| | | PL 306211 A1 | 06-03-1995 |
| | | US 5447687 A | 05-09-1995 |
| | | WO 9422002 A1 | 29-09-1994 |
| US 5347122 A | 13-09-1994 | AT 144324 T | 15-11-1996 |
| | | AU 651801 B2 | 04-08-1994 |
| | | DE 69028925 D1 | 21-11-1996 |
| | | DE 69028925 T2 | 13-02-1997 |
| | | EP 0504197 A1 | 23-09-1992 |
| | | JP 3452566 B2 | 29-09-2003 |
| | | JP H05505457 A | 12-08-1993 |
| | | US 5347122 A | 13-09-1994 |
| | | WO 9109300 A1 | 27-06-1991 |
| US 5837195 A | 17-11-1998 | CA 2177228 A1 | 14-01-1997 |
| | | DE 69628614 D1 | 17-07-2003 |
| | | DE 69628614 T2 | 29-04-2004 |
| | | EP 0753735 A2 | 15-01-1997 |
| | | JP 9053982 A | 25-02-1997 |
| | | US 5686046 A | 11-11-1997 |
| | | US 5837195 A | 17-11-1998 |
| US 2001033381 A1 | 25-10-2001 | AU 6075100 A | 30-01-2001 |
| | | US 2001033381 A1 | 25-10-2001 |
| | | US 2002060791 A1 | 23-05-2002 |
| | | WO 0104608 A1 | 18-01-2001 |
| US 2006008860 A1 | 12-01-2006 | AT 429507 T | 15-05-2009 |
| | | CA 2572608 A1 | 17-08-2006 |
| | | CN 101040054 A | 19-09-2007 |
| | | DK 1763584 T3 | 03-08-2009 |
| | | EP 1763584 A2 | 21-03-2007 |
| | | ES 2324952 T3 | 20-08-2009 |
| | | JP 2008504841 A | 21-02-2008 |
| | | US 2006008860 A1 | 12-01-2006 |
| | | US 2009029398 A1 | 29-01-2009 |

EPO FORM P0459

For more details about this annex : see Official Journal of the European Patent Office, No. 12/82

**ANNEX TO THE EUROPEAN SEARCH REPORT ON EUROPEAN PATENT APPLICATION NO.** EP 12 16 2216

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2012

| Patent document cited in search report | Publication date | Patent family member(s) | Publication date |
|---|---|---|---|
| | | WO 2006085972 A2 | 17-08-2006 |
| US 6042785 A | 28-03-2000 | AT 389170 T | 15-03-2008 |
| | | DE 69738555 T2 | 02-04-2009 |
| | | EP 0803724 A2 | 29-10-1997 |
| | | FI 961742 A | 23-10-1997 |
| | | US 6042785 A | 28-03-2000 |
| US 2007183931 A1 | 09-08-2007 | CN 101379390 A | 04-03-2009 |
| | | EP 1982161 A2 | 22-10-2008 |
| | | JP 2009526239 A | 16-07-2009 |
| | | US 2007183931 A1 | 09-08-2007 |
| | | WO 2007092903 A2 | 16-08-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007060945 A
- WO 2008105893 A
- JP 2001136999 A
- US 20080261294 A1
- US 20110183371 A1
- US 20080241871 A1
- WO 09157510 A


### Non-patent literature cited in the description


- *Proceedings of 13th Annual Technological Meeting on Air Cleaning and Contamination Control,* 1995, 331-334